(19) Europäisches Patentamt / European Patent Office / Office européen des brevets

(11) **EP 2 610 358 A1**

(12) **EUROPEAN PATENT APPLICATION**
published in accordance with Art. 153(4) EPC

(43) Date of publication:
**03.07.2013 Bulletin 2013/27**

(51) Int Cl.:
*C22C 9/00* (2006.01)　*C22C 9/01* (2006.01)
*C22C 9/02* (2006.01)　*C22C 9/04* (2006.01)
*C22C 9/05* (2006.01)　*C22C 9/06* (2006.01)
*C22C 9/10* (2006.01)　*C22F 1/08* (2006.01)
*H01B 1/02* (2006.01)　*H01R 13/03* (2006.01)
*C22F 1/00* (2006.01)

(21) Application number: **11820069.0**

(22) Date of filing: **29.08.2011**

(86) International application number:
**PCT/JP2011/069465**

(87) International publication number:
**WO 2012/026610 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2010 JP 2010190859**

(71) Applicant: **Furukawa Electric Co., Ltd.**
**Chiyoda-ku**
**Tokyo 100-8322 (JP)**

(72) Inventors:
• **KANEKO, Hiroshi**
**Tokyo 100-8322 (JP)**
• **EGUCHI, Tatsuhiko**
**Tokyo 100-8322 (JP)**

(74) Representative: **Forstmeyer, Dietmar et al**
**BOETERS & LIECK**
**Oberanger 32**
**80331 München (DE)**

(54) **COPPER ALLOY SHEET AND MANUFACTURING METHOD FOR SAME**

(57) {Problems} To provide a copper alloy sheet material and a method of producing the same, which is high in Young's modulus and excellent in mechanical strength, and which is suitable for lead frames, connectors, terminal materials, and the like in electrical/electronic equipments, for connectors, for example, to be mounted on automotive vehicles, and for terminal materials, relays, switches, and the like.

{Means to solve} A copper alloy sheet material, having an alloy composition comprising any one, two, or three of Cr, Zr, and Ti in 0.05 to 1.0 mass% in total, with the balance being copper and unavoidable impurities, wherein, in crystal orientation analysis by EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%; and a method of producing the same.

**Description**

TECHNICAL FIELD

The present invention relates to a copper alloy sheet material and a method of producing the same, and specially the present invention relates to a copper alloy sheet material that can be applied to, for example, lead frames, connectors, terminal materials, relays, switches, sockets, motors, and the like, for parts to be mounted on automotives or for electrical/ electronic equipments, and to a method of producing the same.

BACKGROUND ART

Characteristics required for copper alloy sheet materials that are used in applications, such as lead frames, connectors, terminal materials, relays, switches, sockets, and motors, for parts to be mounted on automotives or for electrical/electronic equipments, include, for example, electrical conductivity, proof stress (yield stress), tensile strength, Young's modulus, and stress relaxation resistance. As the trends in recent years, the following three trends may be exemplified.
Firstly, studies have been made in weight reduction or reduction of materials to be used (for example, sheet materials of copper alloys) by thinning in thickness or narrowing in width of the materials. However, in those cases, there is a problem that those reductions cannot be attained with size reduction of parts, since it is necessary to take a large displacement amount of a spring material. Thus, in order to obtain a high stress with a small displacement, there is a need for a material having a high Young's modulus.
Secondly, since it is necessary to set a large cross-sectional area for an electrically conductive part, such as a large electrical-current connector, generally use is made of a thick-sheet material with sheet thickness, for example, of 1 mm or more. However, there is a problem of spring back when being conducted to bending deformation. Thus, in order to further lower the amount of the spring back when being conducted to bending deformation, there is a need for a material high in Young's modulus.
With respect to the above-mentioned two trends, the direction taken out from a material of a contact of a connector, is generally the transversal direction (hereinafter which may be abbreviated to as TD) of a rolled sheet, which is the 90° direction to the rolling direction, and stress is applied to or bending deformation is made in this TD direction. Thus, there is a need for a sheet material which is enhanced in the Young's modulus in the TD.
Thirdly, large electrical-current connectors and the like have a problem that the materials themselves cause self-heating, due to a Joule heat generated by a current passing therethrough, thereby to cause stress relaxation. With respect to the problem that an initial contact pressure cannot be maintained due to this "setting" upon use, there is a need for a material excellent in stress relaxation resistance.
There were made some proposals for changing the Young's modulus of copper alloys.
Patent Literature 1 proposed a method of layering 100 or more layers in total of copper alloy layers and iron alloy layers in an alternate superposing fashion.
Further, Patent Literature 2 proposed a method of enhancing the Young's modulus in the 45° direction to the rolling direction of a copper alloy foil containing a trace amount of silver.
Further, Patent Literatures 3 and 4 proposed methods of lowering the Young's modulus of a material, by adding a large amount of Zn and controlling the amount of Sn.

CITATION LIST

PATENT LITERATURES

Patent Literature 1: JP-A-2005-225063 ("JP-A" means unexamined published Japanese patent application)
Patent Literature 2: JP-A-2009-242846
Patent Literature 3: JP-A-2001-294957
Patent Literature 4: JP-A-2003-306732

SUMMARY OF INVENTION

TECHNICAL PROBLEM

Meanwhile, Patent Literature 1 was insufficient, due to low in the electrical conductivity, and thus there were a problem of corrosion of the iron alloy layers, a problem of insufficient homogeneity when conducting plating thereto, and the like.

Patent Literature 2 was insufficient, since the Young's modulus in the 90° direction to the rolling direction was lowered, when the Young's modulus in the 45°direction to the rolling direction was enhanced.

In Patent Literature 3, the Young's modulus was lowered to a predetermined value or less, by providing a Cu-Zn-Sn-based alloy containing Zn in a content of 23 to 28 mass%, and the Young's modulus in the direction perpendicular to the expansion or rolled direction was set to 130 kN/mm$^2$ or less. In Patent Literature 4, the Young's modulus was set to 115 kN/mm$^2$ or less, by providing a Cu-Ni-Sn-Zn-based alloy containing Zn in a content of more than 15 mass% and not more than 35%. The techniques described in Patent Literatures 3 and 4 aimed at suppressing the Young's modulus to a predetermined value or less rather than further enhancing the Young's modulus.

Thus, in the conventional techniques, enhancement of the Young's modulus in the TD in copper alloy sheet materials was insufficient, and there were no studies specifically focusing on and controlling the specific orientation component of copper alloy crystals for that purpose.

In view of the problems described above, the present invention is contemplated for providing a copper alloy sheet material, which is high in a Young's modulus in the transverse direction (TD) of a rolled sheet and excellent in a stress relaxation resistance, and which is thus suitable for lead frames, connectors, terminal materials, and the like in electrical/electronic equipments, for connectors, for example, to be mounted on automotive vehicles, and for terminal materials, relays, switches, and the like. The present invention is also contemplated for providing a method of producing the copper alloy sheet material.

SOLUTION TO PROBLEM

The inventors of the present invention extensively conducted investigations, and conducted a study on copper alloys appropriate for electrical/electronic part applications. Thus, the inventors found that the Young's modulus to a stress in the transverse direction (TD) can be enhanced, by increasing the region in which (111) plane is oriented toward the transverse direction (TD) of a rolled sheet; and that the Young's modulus can be remarkably enhanced, when the area ratio of the region is set to a predetermined value or more. In addition to those, the inventors also found that when particular additive alloying elements are contained in the copper alloy system, the stress relaxation resistance can be improved, without lowering an electrical conductivity largely. Further, the inventors also found a production method comprising specific steps, to attain a texture having the specific crystal orientation. The present invention was attained based on those findings.

That is, according to the present invention, there is provided the following means:

(1) A copper alloy sheet material, having an alloy composition comprising any one, two, or three of Cr, Zr, and Ti in an amount of 0.05 to 1.0 mass% in total, with the balance being copper and unavoidable impurities, wherein, in crystal orientation analysis by an EBSD (electron back scatter diffraction) analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(2) A copper alloy sheet material, having an alloy composition comprising any one, two, or three of Cr, Zr, and Ti in an amount of 0.05 to 1.0 mass% in total, and at least one selected from the group consisting of Sn, Zn, Si, Ag, Mn, B, P, Mg, Ni, Fe, Co, and Hf in an amount of 0.005 to 2.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(3) A copper alloy sheet material, having an alloy composition comprising any one or both of Be and Ni in an amount of 0.1 to 3.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(4) A copper alloy sheet material, having an alloy composition comprising any one or both of Be and Ni in an amount of 0.1 to 3.0 mass% in total, and at least one selected from the group consisting of Sn, Zn, Ag, Mn, B, P, Mg, Cr, Al, Fe, Co, Ti, Zr, and Hf in an amount of 0.005 to 2.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(5) A copper alloy sheet material, having an alloy composition comprising any one or both of Ni and Co in an amount of 0.5 to 5.0 mass% in total, and Si in an amount of 0.1 to 1.5 mass%, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(6) A copper alloy sheet material, having an alloy composition comprising any one or both of Ni and Co in an amount of 0.5 to 5.0 mass% in total, Si in an amount of 0.1 to 1.5 mass%, and at least one selected from the group consisting of Sn, Zn, Ag, Mn, B, P, Mg, Cr, Fe, Ti, Zr, and Hf in an amount of 0.005 to 2.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(7) A copper alloy sheet material, having an alloy composition comprising any one, two, or three of Ni, Fe, and Sn in an amount of 0.03 to 5.0 mass% in total, and P in an amount of 0.01 to 0.3 mass%, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(8) A copper alloy sheet material, having an alloy composition comprising any one, two, or three of Ni, Fe, and Sn in an amount of 0.03 to 5.0 mass% in total, P in an amount of 0.01 to 0.3 mass%, and at least one selected from the group consisting of Zn, Si, Ag, Mn, B, Mg, Cr, Co, Ti, Zr, and Hf in an amount of 0.005 to 2.0 mass% in total, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(9) A copper alloy sheet material, having an alloy composition comprising Mg and P in an amount of 0.3 to 2.0 mass% in total, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(10) A copper alloy sheet material, having an alloy composition comprising Mg and P in an amount of 0.3 to 2.0 mass% in total, and at least one selected from the group consisting of Sn, Zn, Ag, Mn, B, Ni, Cr, Fe, Co, Ti, Zr, and Hf in an amount of 0.005 to 2.0 mass% in total, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(11) A copper alloy sheet material, having an alloy composition comprising any one or both of Ti and Fe in an amount of 1.5 to 4.0 mass% in total, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(12) A copper alloy sheet material, having an alloy composition comprising any one or both of Ti and Fe in an amount of 1.5 to 4.0 mass% in total, and at least one selected from the group consisting of Sn, Zn, Si, Ag, Mn, B, P, Mg, Ni, Cr, Co, Zr, and Hf in an amount of 0.005 to 2.0 mass% in total, with the balance being copper and unavoidable impurities,

wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (111) plane and the TD is 20° or less, is more than 50%.

(13) A method of producing the copper alloy sheet material described in any one of items (1) to (12), comprising: subjecting a copper alloy raw material having the alloy composition to give the copper alloy sheet material, to the steps of:

casting [Step 1]; a homogenization heat treatment [Step 2]; first high-temperature rolling [Step 3]; cooling to the dynamic recrystallization temperature or less [Step 4]; second high-temperature rolling [Step 5-1]; and cold-rolling [Step 6], in this order.

(14) A method of producing the copper alloy sheet material described in any one of items (1) to (12), comprising: subjecting a copper alloy raw material having the alloy composition to give the copper alloy sheet material, to the steps of:

casting [Step 1]; a homogenization heat treatment [Step 2]; first high-temperature rolling [Step 3]; water-cooling to room temperature [Step 4A]; second high-temperature rolling after reheating [Step 5-2]; and cold-rolling [Step 6], in this order.

(15) The method of producing the copper alloy sheet material described in (13) or (14), wherein a solution heat treatment [Step 7]; a heat treatment [Step 8]; finish rolling [Step 9]; and a temper annealing [Step 10] are conducted in this order, after the cold-rolling [Step 6].

(16) The method of producing the copper alloy sheet material described in any one of items (13) to (15), wherein, in the second high-temperature rolling [Step 5-1] and [Step 5-2], a shape ratio ($L/h_1$) is 3.5 or less, which is a value obtained by dividing a contact arc length (L) (mm) of a rolling roll represented by formula (1) with a sheet thickness ($h_1$) (mm) at an entry side of a rolling pass, and a strain rate represented by formula (2):

$$(\dot{\varepsilon})$$

is 0.5/sec or more, and the total working ratio in the second high-temperature rolling is 60% or more:

Formula (1)

$$L = \sqrt{R(h_1 - h_2)}$$

wherein R is the radius (mm) of the rolling roll, $h_1$ is the sheet thickness (mm) at the entry side, and $h_2$ is a sheet thickness (mm) at an exit side;

Formula (2)

$$\dot{\varepsilon} = \frac{V_R}{\sqrt{h_1 \cdot R}}\left(1 + \frac{r}{4}\right)\sqrt{r}$$

wherein $V_R$ is a periphery speed (mm/sec) of the roll, R is the radius (mm) of the roll, $h_1$ is the sheet thickness (mm) at the entry side, and r is a rolling reduction ratio.

(17) A copper alloy part, comprising the copper alloy sheet material described in any one of items (1) to (12).

(18) A connector, comprising the copper alloy sheet material described in any one of items (1) to (12).

ADVANTAGEOUS EFFECTS OF INVENTION

The copper alloy sheet material of the present invention has a high Young's modulus in the TD, and is suitable for lead frames, connectors, terminal materials, and the like for electrical/electronic equipments, and for connectors, for example, to be mounted on automotive vehicles, and for terminal materials, relays, switches, and the like.

Further, the method of the present invention of producing the copper alloy sheet material, is suitable as a method of producing the copper alloy sheet material, which has a high Young's modulus in the TD, and which is suitable, for example, for lead frames, connectors, terminal materials, and the like for electrical/electronic equipments, and for connectors, for example, to be mounted on automotive vehicles, and for terminal materials, relays, switches, and the like.

Other and further features and advantages of the invention will appear more fully from the following description, appropriately referring to the accompanying drawings.

BRIEF DESCRIPTION OF THE DRAWINGS

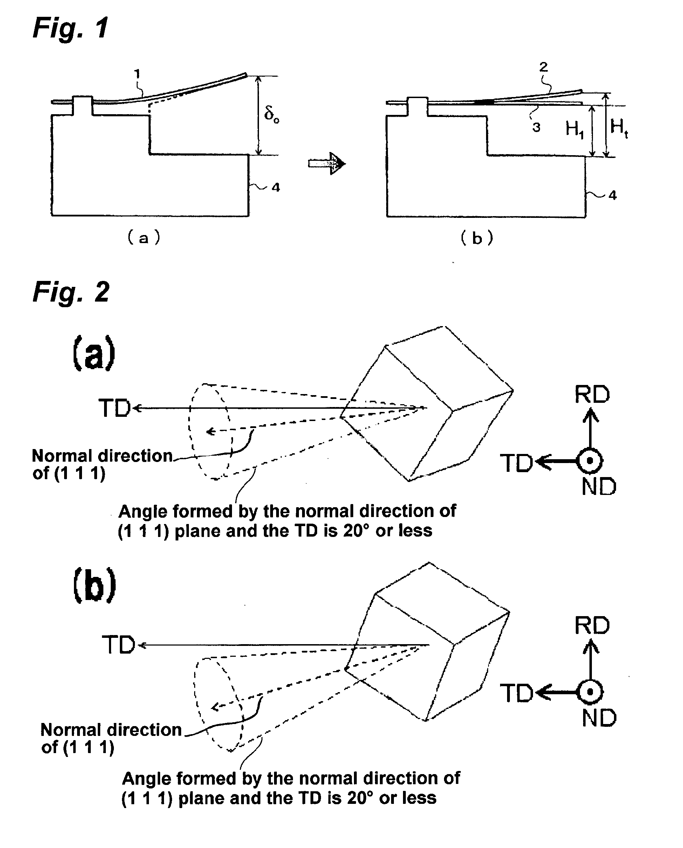

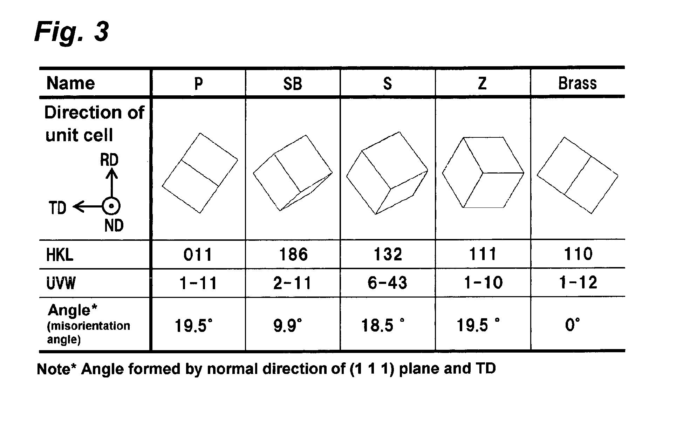

{Fig. 1}
Figs. 1 (a) and 1 (b) are explanatory diagrams for the method of testing the stress relaxation resistance, in which Fig. 1(a) shows the state before a heat treatment, and Fig. 1(b) shows the state after the heat treatment.
{Fig. 2}
Fig. 2(a) is a diagram illustrating an example of an atomic plane in which the angle formed by the normal direction of (111) plane and the TD is 20° or less, and Fig. 2(b) is a diagram illustrating an example of an atomic plane in which the angle formed by the normal direction of (111) plane and the TD is greater than 20°.
{Fig. 3}
Fig. 3 is a table illustrating, among the representative texture orientation components in FCC (face-centered cubic) metals, examples of the texture orientation component in which the atomic plane having an angle formed by the normal direction of (111) plane and the TD of 20° or less is oriented toward the transverse direction (TD) of the rolled sheet.

MODE FOR CARRYING OUT THE INVENTION

Preferable embodiments of the copper alloy sheet material of the present invention will be described in detail. Herein, the term "copper alloy material" (before working, having a predetermined alloy composition) means a product obtained after a copper alloy raw material is worked into a predetermined shape (for example, sheet, strip, foil, rod, or wire). Among them, a sheet material refers to a material which has a specific thickness, is stable in the shape, and is extended in the plane direction, and in a broad sense, the sheet material is meant to encompass a strip material. In the present invention, there are no particular limitations on the thickness of the sheet material, but when it is considered that the thickness should well exhibit the effects of the present invention and should be suitable for practical applications, the thickness is preferably 5 to 0.03 mm, and more preferably 1 to 0.05 mm.
In the copper alloy sheet material of the present invention, the characteristics are defined by the accumulation ratio of the atomic plane in a predetermined direction of a rolled sheet, but this will be judged enough if the copper alloy sheet material has such characteristics. The shape of the copper alloy sheet material is not intended to be limited to a sheet material or a strip material. It is noted that, in the present invention, a tube material can also be construed and treated as a sheet material.

In order to enhance the Young's modulus in the TD, the inventors of the present invention extensively conducted extensive studies on the relationship with the texture. As a result, the inventors found that the Young's modulus becomes the highest in the case where the (111) plane is oriented toward the stress direction.

Herein, the method of indicating the crystal orientation in the present specification is such that various regions in the material are indicated in the form of (h k l) [u v w], using the index (h k l) of the crystal plane that is perpendicular to the Z-axis (parallel to the rolled plane (XY plane)) and the index [u v w] of the crystal plane that is perpendicular to the X-axis (parallel to YZ plane). Further, the orientation that is equivalent based on the symmetry of the cubic crystal of a copper alloy is indicated as {h k l} <u v w>, using parenthesis symbols representing families, such as in (1 3 2) [6 -4 3], and (2 3 1) [3 -4 6].
Some representative examples are known of the orientation components of the texture in which atomic planes having an angle formed by the normal direction of the (111) plane and the TD of 20° or less are oriented toward the TD, which are shown in Fig. 3 for reference. Examples include P orientation {0 1 1} <1 1 1 >, SB orientation {1 8 6} <2 1 1 >, S orientation {1 3 2} <6 4 3>, Z orientation {1 1 1} <1 1 0>, and Brass orientation {1 1 0} <1 1 2>. If it is not any of these representative orientation components, use may be made of any crystal orientation in which the (111) plane is oriented toward the TD. The state in which the proportion of all of the texture orientation components in which the (1 1 1) plane is oriented toward the TD, is comprehensively increased, is the texture having a predetermined area ratio as defined in the present invention. Conventionally, it is not known to simultaneously control the area ratio of atomic planes having these orientations.
When the area ratio of the region having atomic planes in which the angle formed by the normal direction of the (111) plane and the TD is 20° or less, in the transverse direction (TD) of a rolled sheet, is more than 50%, the effects described above can be obtained. The area ratio of the region having atomic planes in which the angle formed by the normal direction of the (111) plane and the TD is 20° or less, in the transverse direction (TD) of a rolled sheet (hereinafter also referred to as the area ratio of the atomic planes in which the (111) plane is oriented toward the TD, or simply referred to as the area ratio), is preferably 60% or more, more preferably 70% or more. Although the upper limit of this area ratio is not particularly limited, the limit is 95%.

The method of indicating the crystal orientation in the present specification, is such that a Cartesian coordinate system is employed, representing the longitudinal direction (LD) of the sheet material {which equals to the rolling direction (RD) of the sheet material} in the X-axis, the transverse direction (TD) in the Y-axis, and the thickness direction of the sheet material {which equals to the direction (ND) normal to the rolling direction of the sheet material} in the Z-axis, and the proportion of a region in which the (111) plane is oriented toward the TD is defined with the area ratio. The angle formed by the two vectors of the normal direction of the (111) plane of each grain within the measured region and the TD is calculated, and the sum of the area is calculated for the region having atomic planes in which this angle is 20° or less. A value obtained by dividing this sum by the total measured area is defined as the ratio of the area (i.e. area ratio) (%) of a region having atomic planes in which the angle formed by the normal direction of the (111) plane and the TD is 20° or less.

That is, in the present invention, in connection with the accumulation of those atomic planes oriented toward the transverse direction (TD) of a rolled sheet, the region having atomic planes in which the angle formed by the normal direction of the (111) plane and the TD is 20° or less, means the sum total of regions (sum of these areas) having atomic planes that are oriented toward the transverse direction (TD) of the rolled sheet, that is, in connection with the accumulation of atomic planes facing to the TD, regions combining each of the (1 1 1) plane itself which adopts the transverse direction (TD) of the rolled sheet as the normal direction, which is an ideal orientation, and the atomic planes in which the angle formed by the normal direction of the (111) plane and the TD is 20° or less. Hereinafter, these regions will also be simply referred to as a region of atomic planes in which the (111) plane is oriented toward the TD.

Fig. 2 illustrates the matters described above. Fig. 2(a) is a diagram illustrating an example of the atomic plane in which the angle formed by the normal direction of the (111) plane and the TD is 20° or less. In the present specification, the atomic plane shown with this example is referred to as an atomic plane having an orientation in which the (111) plane is oriented toward the transverse direction (TD) of the rolled sheet. Fig. 2(b) illustrates an example of an atomic plane in which the angle formed by the normal direction of the (1 1 1) plane and the TD is greater than 20°, and the atomic plane shown with this example is referred to as an atomic plane having an orientation in which the (1 1 1) plane is not oriented toward the transverse direction (TD) of the rolled sheet. In a copper alloy, there are eight (111) planes, but among them, only for the (1 1 1) plane in which the normal direction vector is closest to the TD, the region of vectors in which the angle formed by the normal direction of the (111) plane and the TD is 20° or less, is indicated by a cone (dashed line) in the diagram in Fig. 2.

The data obtained from the orientation analysis based on EBSD includes the orientation data to a depth of several tens nanometers, through which the electron beam penetrates into the sample. However, since the depth is sufficiently small as compared with the width to be measured, the data is described in terms of ratio of an area, i.e. area ratio, in the present specification.

The analysis of the crystal orientation in the present invention is conducted using the EBSD method. The EBSD method, which stands for Electron Backscatter Diffraction, is a technique of crystal orientation analysis using reflected electron Kikuchi-line diffraction (Kikuchi pattern) that occurs when a sample is irradiated with an electron beam under a scanning electron microscope (SEM). In the present invention, a sample area, which is measured 500 $\mu$m on each of the four sides and which contains 200 or more grains, is subjected to an analysis of the orientation, by scanning in a stepwise manner at an interval of 0.5 $\mu$m.

Since EBSD measurement is used for the analysis of crystal orientation, this is largely different from the measurement of the accumulation of particular atomic plane(s) against the plane direction (ND) according to the conventional X-ray diffraction method, and three-dimensional crystal orientation data that is closer to the complete one is obtained with higher resolution power. Therefore, it is possible to obtain completely novel finding on the crystal orientation that governs the Young's modulus in the TD direction.

In regard to the EBSD analysis, in order to obtain a clear Kikuchi-line diffraction image, it is preferable to mirror polish the substrate surface, with polishing particles of colloidal silica after mechanical polishing, and then to conduct the analysis. Further, the measurement is conducted from the sheet surface.

Herein, the features of the EBSD analysis will be explained in comparison with the X-ray diffraction analysis. Firstly, an X-ray diffractometry can measure only five kinds of planes: i.e. ND//(1 1 1), (2 0 0), (2 2 0), (3 1 1), and (4 2 0) planes, each of which satisfies the Bragg's diffraction conditions and can provide a sufficient diffraction intensity. However, the X-ray diffractometry cannot measure any crystal orientations that are expressed by a high index, such as ND//(511) plane and ND//(951) plane, which correspond to an angle formed with (i.e. a misorientation angle from) the Cube orientation from 15 to 30°. Namely, utilizing the EBSD analysis, information relating to those crystal orientations expressed by a high index can be obtained, for the first time, which makes it to possible to clarify the relationships between the metal microstructure specified by this way and the action thereof.

Secondly, the X-ray diffraction measures the content of a crystal orientation included in about $\pm 0.5°$ of ND//{hkl}. On the other hand, since a Kikuchi pattern is utilized in the EBSD analysis, incomparably broader information on metal microstructures can be cyclopedically obtained with the EBSD analysis, which is not limited to specific crystal planes, to clarify a state of the whole alloy material, which state is difficult to specify with the X-ray diffraction.

As explained above, the information obtainable via the EBSD analysis and the information obtainable via the X-ray diffraction analysis differ from each other in the points of the contents and the natures.

Unless otherwise specified, in the present specification, the results of EBSD analysis are results obtained in connection with the ND direction of a copper alloy sheet material.

In the present invention, it is preferable to employ any of the following alloy systems, from the viewpoints of the control of the above-mentioned texture and the relationship of the TD direction with the Young's modulus. First, the details of the main alloying elements to be added (main solute elements) in the whole alloying elements of the respective alloy systems according to the present invention will be shown below.

<1. Cu-(Cr, Zr, Ti)-based alloy>

With respect to chromium (Cr), zirconium (Zr), and titanium (Ti), by controlling the respective addition amount thereof, it is possible to precipitate Cr alone, Zr alone, Ti alone, a compound of any of these elements, and/or a compound of any of these elements and copper, thereby to enhance the mechanical strength and improve the stress relaxation resistance of the resultant copper alloy. The addition amount of any one, two, or three of Cr, Zr, and Ti in total is 0.1 to 1.0 mass%, preferably 0.35 to 0.7 mass%. The respective addition amount of Cr, Zr, and Ti is preferably 0.1 to 0.45 mass%, more preferably 0.2 to 0.4 mass%.

When the total addition amount of these elements is too larger than the above-mentioned range, the electrical conductivity is lowered, whereas when the total addition amount is too small, the effects cannot be sufficiently obtained.

<2. Cu-(Be, Ni)-based alloy>

With respect to delirium (Be) and nickel (Ni), by controlling the respective addition amount thereof, it is possible to precipitate Be and/or a Be-Ni compound, thereby to enhance the mechanical strength and improve the stress relaxation resistance of the resultant copper alloy. The addition amount of any one or two of Be and Ni in total is 0.1 to 3.0 mass%, preferably 2.0 to 3.0 mass%. The addition amount of Be is preferably 0.1 to 2.8 mass%, more preferably 0.2 to 2.5 mass%. The addition amount of Ni is preferably 0.1 to 2.5 mass%, more preferably 0.2 to 2.0 mass%. When the total addition amount of these elements is too larger than the above-mentioned range, the electrical conductivity is lowered, whereas when the total addition amount is too small, the effects cannot be sufficiently obtained.

<3. Cu-(Ni, Co)-based alloy>

With respect to nickel (Ni), cobalt (Co), and silicon (Si), by controlling the respective addition amount thereof, it is possible to precipitate a Ni-Si, Co-Si, and/or Ni-Co-Si compound, thereby to enhance the mechanical strength of the resultant copper alloy. The addition amount of any one or two of Ni and Co in total is preferably 0.3 to 5.0 mass%, more preferably 0.6 to 4.5 mass%, further preferably 0.8 to 4.0 mass%. The addition amount of Ni is preferably 1.5 to 4.2 mass%, more preferably 1.8 to 3.9 mass%. The addition amount of Co is preferably 0.3 to 1.8 mass%, more preferably 0.5 to 1.5 mass%. When the total addition amount of these elements is too much, the electrical conductivity is lowered, whereas when the total addition amount is too small, the mechanical strength becomes insufficient.

In the case where enhancement of the electrical conductivity is specifically desired, it is preferable to contain Co as an essential alloying element. In the case where further enhancement of the electrical conductivity is specifically desired, it is preferable to contain only Co and Si, without containing Ni.

The addition amount of Si is preferably 0.1 to 1.5 mass%, more preferably 0.2 to 1.2 mass%.

Meanwhile, since Co is one of rare elements and the solution temperature is raised by adding Co, it is also preferable not to add Co, in the case where it is not necessary to largely enhance the electrical conductivity, depending on the purpose of use.

<4. Cu-(Ni, Fe, Sn)-P-based alloy>

With respect to nickel (Ni), iron (Fe), tin (Sn), and phosphorus (P), by controlling the respective addition amount thereof, it is possible to precipitate Fe alone, a compound of Fe-P, Ni-P, and/or Fe-Ni-P, thereby to enhance the mechanical strength and improve the stress relaxation resistance of the resultant copper alloy. Sn has a synergistic effect with Fe, Ni, and/or P on the improvement of the stress relaxation resistance. The addition amount of at least one of Ni, Fe, and Sn in total is 0.03 to 5.0 mass%, preferably 1.0 to 4.0 mass%, more preferably 2.0 to 3.0 mass%. The respective addition amount of Fe and Ni is preferably 0.03 to 3.0 mass%, more preferably 0.5 to 2.0 mass%. The addition amount of Sn is preferably 0.2 to 1 mass%, more preferably 0.25 to 0.5 mass%. The addition amount of P is preferably 0.01 to 0.2 mass%, more preferably 0.02 to 0.08 mass%.

When the total addition amount of these elements is too larger than the above-mentioned range, the electrical conductivity is lowered, whereas when the total addition amount is too small, the effects cannot be sufficiently obtained.

<5. Cu-Mg-P-based alloy>

With respect to magnesium (Mg) and phosphorus (P), by controlling the respective addition amount thereof, it is possible to precipitate a Mg-P compound, thereby to enhance the mechanical strength and improve the stress relaxation resistance of the resultant copper alloy. The addition amount of Mg and P in total is 0.3 to 2.0 mass%, preferably 1.5 to 2.0 mass%.

The respective addition amount of Mg and P is preferably 0.3 to 1.0 mass%, more preferably 0.35 to 0.5 mass%. When the total addition amount of these elements is too larger than the above-mentioned range, the electrical conductivity is lowered, whereas when the total addition amount is too small, the effects cannot be sufficiently obtained.

<6. Cu-Ti-Fe-based alloy>

With respect to titanium (Ti) and iron (Fe), by controlling the respective addition amount thereof, it is possible to precipitate Fe alone, a Fe-Ti compound, and/or a compound of any of these elements and copper, thereby to enhance the mechanical strength and improve the stress relaxation resistance of the resultant copper alloy. The addition amount of any one or two of Fe and Ti in total is 1.5 to 4.0 mass%, preferably 1.6 to 3.0 mass%. The addition amount of Ti is preferably 1.5 to 3.5 mass%, more preferably 2.0 to 3.0 mass%. The addition amount of Fe is preferably 0.05 to 0.40 mass%, more preferably 0.1 to 0.3 mass%. When the total addition amount of these elements is too larger than the above-mentioned range, the electrical conductivity is lowered, whereas when the total addition amount is too small, the effects cannot be sufficiently obtained.

<Additional alloying elements>

The effects of additional alloying elements will be mentioned, which improve the stress relaxation resistance, when added in a small amount as additional alloying elements, besides the main solute elements shown in the above 1. to 6. Examples of the preferable additional alloying elements include Sn, Zn, Si, Ag, Mn, B, P, Mg, Ni, Cr, Co, Al, Fe, Ti, Zr, and Hf. These elements are included as main solute elements in some alloy systems of the above 1. to 6., and in such the cases, it goes without saying that those elements are not further contained as the additional alloying elements. In order to sufficiently utilize the effects by addition thereof and not to lower the electrical conductivity, the content of at least one element selected from the group consisting of Sn, Zn, Si, Ag, Mn, B, P, Mg, Ni, Cr, Co, Al, Fe, Ti, Zr, and Hf in total is preferably 0.005 to 2.0 mass%, more preferably 0.01 to 1.5 mass%, and further preferably 0.03 to 0.8 mass%. When the total addition amount of these additional alloying elements is too larger than the above-mentioned range, the electrical conductivity is lowered, whereas when the total addition amount is too small, the effects by addition thereof are hardly exhibited.

<Production method>

Next, the method of the present invention of producing the copper alloy sheet material (method of controlling the crystal orientation of the material) will be explained.

In the conventional methods of producing a copper alloy, an ingot that has been subjected to a homogenization heat treatment is formed into a thin sheet at the steps of hot-rolling and cold-rolling, followed by, in the mid course of those rolling steps, recrystallization annealing, a solution heat treatment, a heat treatment, and temper annealing, thereby to control the mechanical property, the electrical conductivity, and other properties. The purpose of the hot-rolling is to put a material into a high temperature, thereby to lower the deformation resistance and reduce or thin the sheet thickness with a small energy of rolling.

For example, generally, a precipitate-type copper alloy is produced by working an ingot that has been subjected to a homogenization heat treatment into a thin sheet at the steps of hot-working and cold-working, followed by conducting a final solution heat treatment at a temperature in the range of 700 to 1,020°C to make the solute atoms into a solid solution again, and then conducting a heat treatment and finish cold-rolling, thereby to satisfy the required mechanical strength. The conditions for the heat treatment and the finish cold-rolling are adjusted, in accordance with the desired characteristics, such as mechanical strength and electrical conductivity. The texture of the resultant copper alloy is approximately determined by the recrystallization occurring in the final solution heat treatment in this series of steps, and is finally determined by the rotation of orientation occurring in the finish rolling.

On the other hand, in the present invention, the area in which the (111) plane is oriented toward the TD can be increased by conducting the following second high-temperature rolling under a predetermined working condition, thereby to remarkably enhance the Young's modulus in the TD. Herein, the first high-temperature rolling is a so-called hot-rolling, and means high-temperature rolling that is conducted at the dynamic recrystallization temperature or higher. The second high-temperature rolling means, unlike the so-called hot-rolling, high-temperature rolling at a temperature higher than room temperature and lower than the dynamic recrystallization temperature {preferably, a temperature higher than 300 to 400°C and not higher than (a temperature 20 to 300°C lower than the dynamic recrystallization temperature)}. The cold-rolling means low-temperature rolling at room temperature. Further, workings other than rolling are similarly referred to as, for example, hot working, high-temperature (warm) working, and cold working, depending on the temperature range. As used herein, the room temperature means 20 to 35°C.

The effects of these working temperatures in the mechanism of the control of the crystal orientation in the present invention are presumed as follows. Hot rolling, which is a conventional method for thinning, is not preferable, since the crystal orientation is randomized by dynamic recrystallization, whereas in cold-rolling, the grains are subjected to grain subdivision and thus the development of the texture is little. Contrary to those, according to the second high-temperature rolling conducted in the method of the present invention, it is presumed that randomization of orientation due to dynamic recrystallization does not occur, and the orientation is not divided by grain boundary sliding and dynamic/static restoration, and thus the texture can be sharpened drastically as compared with the above-mentioned conventional methods.

Examples of a preferable method of producing the copper alloy sheet material of the present invention include a method, which comprises: in this order, melting a copper alloy raw material composed of the above-mentioned predetermined alloying element composition in a high-frequency melting furnace, followed by casting the resultant molten metal [Step 1]; homogenization heat treatment [Step 2]; first high-temperature rolling [Step 3]; cooling to the dynamic recrystallization temperature or lower [Step 4]; second high-temperature rolling [Step 5-1]; and cold-rolling [Step 6]; which may be followed by, in this order, as necessary, solution heat treatment [Step 7]; heat treatment [Step 8]; finish rolling [Step 9]; and temper annealing [Step 10] (hereinafter referred to as a preferable production method 1 of the present invention).

Another preferable example of the production method is a method, which comprises: in this order, melting a copper alloy raw material composed of the above-mentioned predetermined alloying element composition in a high-frequency melting furnace, followed by casting the resultant molten metal [Step 1]; homogenization heat treatment [Step 2]; first high-temperature rolling [Step 3]; cooling to the room temperature [Step 4A]; reheating, followed by second high-temperature rolling [Step 5-2]; and cold-rolling [Step 6]; which may be followed by, in this order, as necessary, solution heat treatment [Step 7]; heat treatment [Step 8]; finish rolling [Step 9]; and temper annealing [Step 10] (hereinafter referred to as a preferable production method 2 of the present invention).

A concept relating to the avoidance of precipitation in the second high-temperature rolling in the above-mentioned production method will be mentioned. Since the amount of oversaturation solid-solution is small in a high-temperature region, such as 800°C or higher, the precipitation amount is small. In a middle temperature region, such as 650 to 800°C, the amount of oversaturation solid-solution increases and the speed of precipitation is high, and thus precipitation proceeds the fastest. In a low-temperature region, such as 650°C or lower, the amount of oversaturation solid-solution is large, but the speed of precipitation is slow, and thus precipitation that causes severe lowering in mechanical strength can be suppressed. The temperature zones of those "high-temperature region, middle-temperature region, and low-temperature region" for these precipitations differ depending on the alloy system and the respective content of an alloying element.

According to the preferable production method 1 of the present invention, there is a case, when the precipitate is kept in the middle temperature region along with the lowering of the temperature in the second high-temperature rolling, the precipitate may be coarsened, thereby to lower the mechanical strength. This is specifically remarkable in an alloy composition which is high in a content of an alloying element and which is fast in the speed of precipitation. Therefore, it is preferable to apply the preferable production method 1 of the present invention, to a system which is slow in precipitation in the second high-temperature rolling.

On the other hand, by applying the preferable production method 2 of the present invention, it is possible to conduct the second high-temperature rolling with avoiding precipitation, by conducting the first high-temperature rolling in the high-temperature region, followed by water cooling to avoid precipitation, and then conducting the second high-temperature rolling after re-heating to the low-temperature region. Therefore, it is effective to apply the preferable production method 2 of the present invention, to a system which is fast in precipitation in the second high-temperature rolling.

In the production method of the present invention, it is preferable, in the second high-temperature rolling [Step 5-1] or [Step 5-2], that a shape ratio ($L/h_1$) is 3.5 or less, which is a value obtained by dividing a contact arc length (L) of a rolling roll with a sheet thickness ($h_1$) at an entry side of a rolling pass; that a strain rate:
$$(\dot\varepsilon)$$

is 0.5/sec or more, which is obtained by the following formula; and that the total working ratio in the second high-temperature rolling is 60% or more. Herein, the total working ratio is a value represented by %, which is a ratio obtained by dividing the amount of decrease in the sheet thickness (mm) by the second high-temperature rolling in plural passes with the sheet thickness (mm) before the second high-temperature rolling. In the case where the working is conducted in one pass, the total working ratio means the working ratio itself of the one pass.

The contact arc length (L) is obtained by formula:

$$L = \sqrt{R(h_1 - h_2)}$$

wherein R is the radius of the rolling roll, $h_1$ is the sheet thickness at the entry side, and $h_2$ is a sheet thickness at an exit side. The value obtained by dividing the contact arc length (L) with the sheet thickness ($h_1$) of the entry side is calculated as a shape ratio ($L/h_1$).

The strain rate in the rolling is obtained by formula:

$$\dot\varepsilon = \frac{V_R}{\sqrt{h_1 \cdot R}}\left(1 + \frac{r}{4}\right)\sqrt{r}$$

wherein $V_R$ is a periphery speed (mm/sec) of the roll, R is the radius (mm) of the roll, $h_1$ is the sheet thickness (mm) at the entry side, and r is a rolling reduction ratio {the reduction ratio in this formula has no unit}.

When the shape ratio ($L/h_1$) in the second high-temperature rolling is more than 3.5, it is not preferable, since the shear deformation is strengthen and the ratio of the orientation of the (1 0 0) plane toward the ND increases, resulting in lowering of the ratio of the orientation of the (111) plane toward the TD. The lower limit of the shape ratio is not particularly limited.

Further, when the strain rate is less than 0.5/sec, cracks may occur in the material due to middle-temperature embrittlement. Although the upper limit value of the strain rate is not particularly limited, it is generally about 100/sec.

Further, when the total working ratio in the second high-temperature rolling is less than 60%, it is not preferable, since the effects thereof cannot be sufficiently obtained. Preferably, the total working ratio is 70% or more. Although the upper limit value of the total working ratio in the second high-temperature rolling is not particularly limited, it is generally about 95%.

The dynamic recrystallization temperature refers to a boundary temperature, at which dynamic recrystallization occurs in the case where rolling is conducted at that temperature or higher, or alternatively at which dynamic recrystallization does not occur at a temperature lower than that temperature. Although the dynamic recrystallization temperature varies, depending on the alloy system and an alloying element to be added, it can be determined by a preliminary experiment. The presence or absence of dynamic recrystallization is confirmed and the relationship of it with the working temperature is figured out, by heating the material of the alloying elements to any of plural temperatures, followed by rolling and water-cooling to freeze the rolled microstructure, and then observing the microstructures before and after the rolling. With respect to the alloy systems for use in the present invention, the dynamic recrystallization temperature is, for example, about 800°C in the Cu-(Ni, Co)-Si-based alloy, the dynamic recrystallization temperature is, for example, about 800°C in the Cu-(Ni, Fe, Sn)-P-based alloy, the dynamic recrystallization temperature is, for example, about 500°C in the Cu-(Cr, Zr, Ti)-based alloy, the dynamic recrystallization temperature is, for example, about 700°C in the Cu-(Be, Ni)-based alloy, the dynamic recrystallization temperature is, for example, about 600°C in the Cu-Mg-P-based alloy, and the dynamic recrystallization temperature is, for example, about 800°C in the Cu-Ti-Fe-based alloy. The dynamic recrystallization temperatures each are a representative example in the respective alloy system, and the present invention is not limited by these temperatures. For example, the dynamic recrystallization temperature varies, depending on the individual alloy composition depending on the kinds and addition amounts of the additional alloying elements, in addition to the main solute elements in the alloy system in interest.

With respect to the steps after the casting [Step 1], the following conditions are the preferable ranges in the present invention: preferably, in the homogenization heat treatment [Step 2], 700°C to 1,020°C for 10 minutes to 10 hours; in the first high-temperature rolling [Step 3], the working temperature of 500 to 1,020°C (preferably 700 to 1,020°C, more preferably 750 to 1,000°C, further preferably 800 to 1,000°C) and the total working ratio of 20 to 90%; in the cooling [Step 4], cooling in the air, gas cooling, and water-cooling (corresponding to [Step 4A]) to be conducted; in the second high-temperature rolling [Step 5-1 or 5-2], the working temperature of 200 to 750°C (preferably 450 to 750°C, more preferably 450 to 650°C, or alternatively preferably 400 to 650°C, more preferably 400 to 550°C, depending on the alloy system) and the total working ratio of 60 to 95% (preferably 65 to 90%); in the cold-rolling [Step 6], the working ratio of 50 to 99%; in the solution heat treatment [Step 7], the retention at 700°C to 1,020°C for 3 seconds to 10 minutes; in the heat treatment [Step 8], the retention at 250 to 650°C for 5 minutes to 20 hours; in the finish rolling [Step 9], the working ratio of 2 to 60% at room temperature; and in the temper annealing [Step 10], the retention at 300 to 700°C for 10 seconds to 2 hours.

Further, it is preferable that the casting [Step 1] and homogenization heat treatment [Step 2] and first high-temperature rolling [Step 3] are conducted by continuous cast rolling, without lowering the temperature in the mid course of these steps. In the cooling [Step 4], the cooling speed is preferably 1 to 100°C/sec (more preferably 5 to 100°C/sec). In the water-cooling [Step 4A], the cooling speed is preferably 1 to 100°C/sec (more preferably 5 to 100°C/sec). Before and after the solution heat treatment [Step 7], the temperature raising speed is preferably 1 to 100°C/sec, and the cooling speed is preferably 1 to 200°C/sec, more preferably 1 to 100°C/sec.

Scalping (face milling) for scale on the surface of the material, and dissolution by pickling or the like may be introduced as necessary. In the case where the shape after the rolling is not fine, correction by a tension leveler or the like may be introduced as necessary. Further, in the case where precipitate progresses after the first high-temperature rolling or second high-temperature rolling, cooling to room temperature may be conducted as necessary after any of those workings.

It is preferable that the copper alloy sheet material of the present invention is produced by any of the production methods of the above-mentioned embodiments, but the present invention is not necessarily constrained by conducting all of the above-mentioned [Step 1] to [Step 10] in this order, as long as the predetermined area ratio is satisfied in the crystal orientation analysis in the EBSD analysis. Although it is encompassed in the above-mentioned method, the steps may be finished by conducting, for example, the [Step 6] as the final step in the [Step 1] to [Step 10]. Alternatively, the [Step 6] to [Step 8] can be conducted by repeating one or more, or two or more of these steps twice or more. For example, cold-rolling at a working ratio of 2 to 45% [Step 9A] may be conducted before conducting the [Step 7].

Further, as explained above, the working ratio in the respective rolling step (this is also referred to as a rolling reduction ratio or cross-section reduction ratio. The rolling ratio mentioned in the following Comparative Examples has the same meaning.), refers to a value calculated as in the following formula, by using the sheet thickness $t_1$ (mm) before the rolling step and the sheet thickness $t_2$ (mm) after the rolling step.

$$\text{Working ratio (\%)} = \{(t_1 - t_2)/t_1\} \times 100$$

The copper alloy sheet material of the present invention can satisfy the following properties that are required, for example, for a copper alloy sheet material for a connector.

The Young's modulus in the TD is preferably 135 GPa or more, more preferably 140 GPa or more, further preferably 145 GPa or more, particularly preferably 150 GPa or more. Although the upper limit of the Young's modulus is not particularly limited, it is generally 180 GPa or less.

A deflection factor may be used as an alternative property of the Young's modulus. The deflection factor is preferably 120 GPa or more, more preferably 125 GPa or more, further preferably 130 GPa or more, particularly preferably 135 GPa or more.

The deflection factor is measured in a cantilever manner, according to the Technical Standard JCBA T312:2002, "Measuring Method for Factor of Bending Deflection by Cantilever for Copper and Copper Alloy Sheets, Plates and Strips", stipulated by the Japan Copper and Brass Association.

The copper alloy sheet material can realize such favorable characteristics that the stress relaxation resistance, in terms of a stress relaxation ratio (SR), can be 30% or less, preferably 20% or less, most preferably 10% or less, as determined by the measurement method of maintaining at 150°C for 1,000 hours as will be described below.

Since the preferable values of the electrical conductivity and proof stress in the copper alloy sheet material of the present invention differ in the respective alloy system, the values are shown below for each alloy system.

In the Cu-(Cr, Zr, Ti)-based alloy, the electrical conductivity is preferably 50%IACS (hereinafter sometimes simply abbreviated as %) or more, more preferably 65% or more, further preferably 80% or more, particularly preferably 90% or more, and the proof stress is preferably 350 MPa or more, more preferably 450 MPa or more, further preferably 500 MPa or more, particularly preferably 550 MPa or more. Although the respective upper limits of the electrical conductivity and proof stress are not particularly limited, the upper limit of the electrical conductivity is generally 100% or less, and the upper limit of the proof stress is generally 800 MPa or less.

In the Cu-(Be, Ni)-based alloy, the electrical conductivity is preferably 20% or more, more preferably 30% or more, further preferably 45% or more, particularly preferably 55% or more, and the proof stress is preferably 700 MPa or more, more preferably 800 MPa or more, further preferably 900 MPa or more, particularly preferably 1,050 MPa MPa or more. Although the respective upper limits of the electrical conductivity and proof stress are not particularly limited, the upper limit of the electrical conductivity is generally 80% or less, and the upper limit of the proof stress is generally 1,400 MPa or less.

In the Cu-(Ni, Co)-Si-based alloy, the electrical conductivity is preferably 35% or more, more preferably 40% or more, further preferably 45% or more, particularly preferably 50% or more, and the proof stress is preferably 550 MPa or more, more preferably 650 MPa or more, further preferably 700 MPa or more, particularly preferably 800 MPa MPa or more. Although the respective upper limits of the electrical conductivity and proof stress are not particularly limited, the upper limit of the electrical conductivity is generally 70% or less, and the upper limit of the proof stress is generally 1,200 MPa or less.

In the Cu-(Ni, Fe, Sn)-P-based alloy, the electrical conductivity is preferably 35% or more, more preferably 50% or more, further preferably 65% or more, particularly preferably 75% or more, and the proof stress is preferably 250 MPa or more, more preferably 350 MPa or more, further preferably 450 MPa or more, particularly preferably 500 MPa MPa or more. Although the respective upper limits of the electrical conductivity and proof stress are not particularly limited, the upper limit of the electrical conductivity is generally 98% or less, and the upper limit of the proof stress is generally 800 MPa or less.

In the Cu-Mg-P-based alloy, the electrical conductivity is preferably 45% or more, more preferably 50% or more, further preferably 55% or more, particularly preferably 60% or more, and the proof stress is preferably 450 MPa or more, more preferably 490 MPa or more, further preferably 530 MPa or more, particularly preferably 570 MPa MPa or more. Although the respective upper limits of the electrical conductivity and proof stress are not particularly limited, the upper limit of the electrical conductivity is generally 90% or less, and the upper limit of the proof stress is generally 900 MPa or less.

In the Cu-Ti-Fe-based alloy, the electrical conductivity is preferably 8% or more, more preferably 12% or more, further preferably 16% or more, particularly preferably 20% or more, and the proof stress is preferably 800 MPa or more, more preferably 850 MPa or more, further preferably 900 MPa or more, particularly preferably 950 MPa MPa or more. Although the respective upper limits of the electrical conductivity and proof stress are not particularly limited, the upper limit of the electrical conductivity is generally 40% or less, and the upper limit of the proof stress is generally 1,400 MPa or less.

EXAMPLES

The present invention will be described in more detail based on examples given below, but the invention is not meant to be limited by these.

Example 1

The respective alloy containing elements in the column(s) of 'Alloying elements' and optionally 'Other elements' in Table 1, with the balance being Cu and unavoidable impurities, was melted in a high-frequency melting furnace, followed by casting, to obtain an ingot (w 100 mm × l 200 mm × t 40 mm). The resultant ingot was subjected to a homogenization heat treatment at 700 to 1,020°C for 10 minutes to 10 hours, followed by a first high-temperature rolling and a second high-temperature rolling in the following Step A, B, or E.

(Step A)

Conducting the first high-temperature rolling (at a working ratio of 20 to 90%) at a working temperature of 800°C to 1,000°C, followed by water-cooling at a cooling speed of 5 to 100°C/sec to quench to room temperature, re-heating to 650°C, and conducting the second high-temperature rolling (at a working ratio of 60 to 95%) at a working temperature of 450°C to 650°C.

(Step B)

Conducting the first high-temperature rolling (at a working ratio of 20 to 90%) at a working temperature of 800°C to 1,000°C, followed by air-cooling at a cooling speed of 5 to 100°C/sec to cool to a temperature of 750°C or lower, and conducting the second high-temperature rolling (at a working ratio of 60 to 95%) at a working temperature of 450°C to 750°C.

(Step E)

Conducting the first high-temperature rolling (at a working ratio of 20 to 90%) at a working temperature of 800°C to 1,000°C, followed by water-cooling at a cooling speed of 5 to 100°C/sec to quench to room temperature.

After the working via the above Step A, B, or E, the resultant sheet was subjected to cold-rolling at a working ratio of 50 to 99%, and then, in some Examples according to the present invention and Comparative Examples, followed by a solution heat treatment by maintaining at 700°C to 1,020°C for 3 seconds to 10 minutes. The temperature raising speed and cooling speed before and after the solution heat treatment each were 1 to 100°C/sec. Whether the solution heat treatment was done or not done is shown in Table 1. Then, the resultant sheet was subjected to a heat treatment by maintaining at 250 to 650°C for 5 minutes to 20 hours, followed by finish rolling at room temperature at a working ratio of 2 to 60%, and temper annealing at 300 to 700°C for 10 seconds to 2 hours, thereby to produce the respective test specimen of the copper alloy sheet material (t 0.15 mm) of Examples 1-1 to 1-24 according to the present invention and Comparative Examples 1-1 to 1-9.

After the respective heat treatment or rolling above, pickling or surface polishing was conducted according to the state of oxidation or roughness of the material surface, and correction with a tension leveler was conducted according to the shape.

The thus-obtained test specimens were subjected to examination of the properties as described below. The results are shown in Table 1.

a. Area ratio of the region of atomic planes in which (111) plane was oriented toward the TD:

The measurement was conducted with the EBSD method in a measurement region of about 500 $\mu$m on each of the four sides, under the conditions of a scan step of 0.5 $\mu$m. The measured area was adjusted on the basis of the condition of inclusion of 200 or more grains. As explained above, with respect to the regions combining the (111) plane whose normal line was the TD, which is the ideal orientation, and the atomic planes in which the angle formed by the normal direction of the (111) plane and the TD was 20° or less (these planes together constituted the region of atomic planes in which the (111) plane was oriented toward the TD, as described above), the total area ratio of these regions was calculated by the following formula.

$$\text{Area ratio (\%)} = \{(\text{Sum of areas of the atomic planes in which (1 1 1) plane was oriented toward the TD})/\text{total measured area}\} \times 100$$

In the following respective tables, this is simply indicated as "TD//(1 1 1) area ratio (%)".
As an EBSD analyzer, OIM 5.0 (trade name) manufactured by TSL Solutions, Ltd., was used.

b. Young's modulus:

A strip test piece with width 20 mm and length 200 mm was taken out from the rolling perpendicular direction (the direction perpendicular to the rolling direction), a stress was applied to the test piece in the longitudinal direction thereof with a tensile tester, to obtain a proportional constant of the strain and stress. A strain amount that was 80% of that when yielded, was taken as the maximum displacement amount, and a fraction of the respective displacement obtained by dividing the maximum displacement amount into ten fractions was applied to the test specimen, thereby to find the proportional constant of the strain and stress from the ten points, as a Young's modulus.

c. 0.2% proof stress [YS]:

Three test specimens that were cut out from the direction perpendicular to the rolling direction, according to JIS Z2201-13B, were measured according to JIS Z2241, and the 0.2% proof stress (yield stress) is shown as an average value of the results.

d: Electrical conductivity [EC]:

The electrical conductivity was calculated by using the four-terminal method to measure the specific resistance of the material in a thermostat bath that was maintained at 20°C ($\pm$0.5°C). The spacing between terminals was set to 100 mm.

e. Stress relaxation ratio [SR]:

A test piece was taken out in the direction perpendicular to the rolling direction. The stress relaxation ratio was measured, according to JCBA T309:2001 of the Japan Copper and Brass Association (which is a provisional standard; the former standard was the "Electronic Materials Manufacturer's Association of Japan, Technical Standard EMAS-3003"), under the conditions of maintaining at 150°C for 1,000 hours, as shown in the below. An initial stress that was 80% of the yield stress (proof stress) was applied, by the cantilever method.

Figs. 1(a) and 1 (b) each are a drawing explaining the method of testing the stress relaxation resistance, in which Fig. 1(a) shows the state before heat treatment, and Fig. 1 (b) shows the state after the heat treatment. As shown in Fig. 1 (a), the position of a test specimen 1 when an initial stress of 80% of the proof stress was applied to the test specimen 1 cantilevered on a test bench 4, is defined as the distance $\delta_0$ from the reference position. This test specimen was kept in a thermostat at 150°C for 1,000 hours (which corresponds to the heat treatment at the state of the test specimen 1). The position of the test specimen 2 after removing the load, is defined as the distance $H_t$ from the reference position, as shown in Fig. 1 (b). The reference numeral 3 denotes the test specimen to which no stress was applied, and the position of the test specimen 3 is defined as the distance $H_1$ from the reference position. Based on the relationships between those positions, the stress relaxation ratio (%) was calculated as: $\{(H_t - H_1)/(\delta_0 - H_1)\} \times 100$. In the formula, $\delta_0$ represents the distance from the reference position to the test specimen 1; $H_1$ represents the distance from the reference position to the test specimen 3; and $H_t$ represents the distance from the reference position to the test specimen 2.

f. Deflection factor

The deflection factor was measured by the cantilever method, according to "Measuring Method for Factor of Bending Deflection by Cantilever for Copper and Copper Alloy Sheets, Plates and Strips" in the Technical Standard of JCBA T312:2002 of the Japan Copper and Brass Association. The results shown herein are the measured values when the test piece was taken in the direction that was perpendicular to the rolling direction.

Table 1

| ID number | Alloying elements | | | Other elements | Production steps | |
|---|---|---|---|---|---|---|
| | Ni | Co | Si | | Kind of high-temp. rolling | Solution heat treatment |
| | mass% | mass% | mass% | mass% | | |
| Ex 1-1 | 0.50 | 1.00 | 0.36 | | A | Done |
| Ex 1-2 | 1.00 | 0.50 | 0.38 | Ag=0.11, B=0.05 | B | Not done |
| Ex 1-3 | - | 0.80 | 0.45 | | A | Done |
| Ex 1-4 | 0.50 | 1.50 | 0.35 | | B | Not done |
| Ex 1-5 | 0.80 | 1.20 | 0.42 | | A | Not done |
| Ex 1-6 | 1.00 | 1.00 | 0.48 | | B | Done |
| Ex 1-7 | 2.03 | - | 0.51 | Sn=0.51, Zn=1.11 | B | Done |
| Ex 1-8 | 2.31 | - | 0.55 | Sn=0.15, Mg=0.1, Zn=0.5 | B | Done |
| Ex 1-9 | 2.31 | - | 0.67 | Sn=0.15, Mg=0.1, Zn=0.5, Cr=0.15 | A | Done |
| Ex 1-10 | 0.90 | 1.70 | 0.61 | | A | Done |
| Ex 1-11 | 2.81 | - | 0.61 | Mg=0.12 | A | Not done |
| Ex 1-12 | 1.81 | - | 0.52 | Sn=0.51, Zn=1.11 | B | Not done |
| Ex 1-13 | 1.10 | 1.50 | 0.55 | Fe=0.12, P=0.05 | A | Done |
| Ex 1-14 | 3.15 | - | 0.61 | Sn=0.41, Zn=1.11 | A | Done |
| Ex 1-15 | - | 1.38 | 0.38 | Zn=0.21, Mn=0.08 | B | Done |
| Ex 1-16 | 2.92 | - | 0.72 | Zn=0.51, Sn=0.42 | A | Not done |
| Ex 1-17 | 1.35 | 1.15 | 0.61 | | A | Not done |
| Ex 1-18 | 2.15 | - | 0.25 | Ti=0.42 | B | Done |
| Ex 1-19 | - | 1.32 | 0.45 | Mg=0.05, P=0.03 | B | Done |
| Ex 1-20 | 2.15 | 0.40 | 0.61 | Zr=0.03, Hf=0.04 | A | Not done |
| Ex 1-21 | 1.35 | 1.15 | 0.61 | | B | Not done |
| Ex 1-22 | 3.78 | - | 0.91 | Sn=0.15, Mg=0.1, Zn=0.5, Cr=0.19 | A | Done |
| Ex 1-23 | 1.5 | 1.1 | 0.59 | Sn=0.15, Mg=0.12 | A | Done |
| Ex 1-24 | - | 1.82 | 0.55 | | B | Done |

Note: "Ex" means Example according to this invention (the same will be applied herein).

EP 2 610 358 A1

Table 1 (continued)

| ID number | TD//(111) area ratio | Young's modulus in TD | Deflection factor in TD | YS in TD | EC | SR in TD |
|---|---|---|---|---|---|---|
| | % | GPa | GPa | MPa | %IACS | % |
| Ex 1-1 | 62 | 141 | 126 | 655 | 53.9 | 23.1 |
| Ex 1-2 | 75 | 146 | 131 | 716 | 50.7 | 20.5 |
| Ex 1-3 | 56 | 137 | 121 | 691 | 52.2 | 21.6 |
| Ex 1-4 | 82 | 152 | 138 | 718 | 51.7 | 23.2 |
| Ex 1-5 | 93 | 157 | 143 | 714 | 50.4 | 19.4 |
| Ex 1-6 | 81 | 141 | 126 | 738 | 49.0 | 21.6 |
| Ex 1-7 | 58 | 141 | 126 | 643 | 40.2 | 24.2 |
| Ex 1-8 | 64 | 149 | 135 | 732 | 41.5 | 16.5 |
| Ex 1-9 | 72 | 142 | 127 | 778 | 38.6 | 18.9 |
| Ex 1-10 | 66 | 151 | 137 | 836 | 45.9 | 21.0 |
| Ex 1-11 | 82 | 155 | 141 | 652 | 51.0 | 25.2 |
| Ex 1-12 | 88 | 157 | 143 | 572 | 42.3 | 21.5 |
| Ex 1-13 | 92 | 142 | 127 | 834 | 44.9 | 22.4 |
| Ex 1-14 | 68 | 146 | 131 | 762 | 37.3 | 21.5 |
| Ex 1-15 | 74 | 155 | 141 | 793 | 44.4 | 23.0 |
| Ex 1-16 | 82 | 153 | 139 | 752 | 39.2 | 28.0 |
| Ex 1-17 | 88 | 158 | 144 | 736 | 52.4 | 21.3 |
| Ex 1-18 | 74 | 147 | 132 | 742 | 48.6 | 17.6 |
| Ex 1-19 | 82 | 151 | 137 | 682 | 48.4 | 18.3 |
| Ex 1-20 | 87 | 154 | 140 | 725 | 46.2 | 16.7 |
| Ex 1-21 | 91 | 157 | 143 | 871 | 42.1 | 22.3 |
| Ex 1-22 | 58 | 138 | 123 | 865 | 36.1 | 15.3 |
| Ex 1-23 | 64 | 141 | 126 | 783 | 43.7 | 22.0 |
| Ex 1-24 | 71 | 145 | 130 | 763 | 42.8 | 20.3 |

Table 1 (continued)

| ID number | Alloying elements | | | Other elements | Production steps | |
|---|---|---|---|---|---|---|
| | Ni mass% | Co mass% | Si mass% | mass% | Kind of high-temp. rolling | Solution heat treatment |
| C Ex 1-1 | 0.22 | 0.15 | 0.65 | Sn=0.1 | B | Done |
| C Ex 1-2 | 4.12 | 1.44 | 0.95 | Zn=0.21,Mn=0.08 | B | Done |
| C Ex 1-3 | - | 1.12 | 0.08 | | B | Not done |
| C Ex 1-4 | 2.82 | - | 1.72 | | A | Done |
| C Ex 1-5 | 1.50 | 0.82 | 0.72 | Zn=1.25, Mn=0.55, Sn=0.52 | B | Done |
| C Ex 1-6 | 1.50 | 1.20 | 0.78 | P=0.52, Ti=0.44, Mg=0.52, Cr=0.82 | A | Not done |
| C Ex 1-7 | 1.35 | 1.15 | 0.61 | | E | Done |
| C Ex 1-8 | 2.31 | - | 0.55 | Sn=0.15,Mg=0.1,Zn=0.5 | E | Done |
| C Ex 1-9 | 3.78 | - | 0.91 | Sn=0.15,Mg=0.1,Zn=0.5,Cr=0.19 | E | Not done |

Note: "C Ex" means Comparative Example (the same will be applied herein).

Table 1 (continued)

| ID number | TD//(111) area ratio % | Young's modulus in TD GPa | Deflection factor in TD GPa | YS in TD MPa | EC %IACS | SR in TD % |
|---|---|---|---|---|---|---|
| C Ex 1-1 | 54 | 139 | 124 | 482 | 28.5 | 22.6 |
| C Ex 1-2 | 61 | 143 | 128 | 734 | 23.8 | 26.5 |
| C Ex 1-3 | 65 | 144 | 129 | 488 | 37.8 | 35.8 |
| C Ex 1-4 | 71 | 148 | 134 | 737 | 18.1 | 24.5 |
| C Ex 1-5 | 67 | 145 | 130 | 746 | 18.6 | 23.5 |
| C Ex 1-6 | 75 | 150 | 136 | 796 | 15.6 | 21.3 |
| C Ex 1-7 | 45 | 131 | 115 | 762 | 53.2 | 21.3 |
| C Ex 1-8 | 38 | 128 | 112 | 765 | 42.3 | 17.6 |
| C Ex 1-9 | 34 | 125 | 108 | 842 | 38.2 | 15.6 |

As shown in Table 1, Examples 1-1 to 1-24 according to the present invention were excellent in the Young's modulus, the proof stress, the electrical conductivity, and the stress relaxation resistance.

On the contrary, when any of the requirements of the present invention was not satisfied, results were poor in any of the properties.

That is, since Comparative Example 1-1 had a too small total amount of Ni and Co, the density of the compounds (precipitates) that contribute to precipitation hardening was lowered, and the mechanical strength was poor. Further, Si that did not form a compound with Ni or Co, formed a solid solution in the metal texture excessively, and thus the electrical conductivity was poor. Comparative Example 1-2 had a too large total amount of Ni and Co, and thus the electrical conductivity was poor. Comparative Example 1-3 had a too small amount of Si, and thus the mechanical strength was poor. Comparative Example 1-4 had a too large amount of Si, and thus the electrical conductivity was poor. Since Comparative Examples 1-5 to 1-6 each had a too large content of other elements, they were poor in the electrical conductivity.

Comparative Examples 1-7 to 1-9 each were too low in the area ratio of the atomic planes in which (111) plane was oriented toward the TD (the ratio of the (111) plane oriented toward the TD), and were poor in the Young's modulus.

Example 2

The respective alloy containing elements in the column(s) of 'Alloying elements' and optionally 'Other elements' in Table 2, with the balance being Cu and unavoidable impurities, was melted in a high-frequency melting furnace, followed by casting, to obtain an ingot (w 100 mm × l 200 mm × t 40 mm).

Then, the resultant ingot was subjected to a homogenization heat treatment at 700 to 1,020°C for 10 minutes to 10 hours, followed by a first high-temperature rolling and a second high-temperature rolling in the following Step C, D, or E. The Step E was conducted in the same manner as in Example 1 above.

(Step C)

Conducting the first high-temperature rolling (at a working ratio of 20 to 90%) at a working temperature of 700°C to 1,000°C, followed by water-cooling at a cooling speed of 5 to 100°C/sec to quench to room temperature, re-heating to 550°C, and conducting the second high-temperature rolling (at a working ratio of 60 to 95%) at a working temperature of 400°C to 550°C.

(Step D)

Conducting the first high-temperature rolling (at a working ratio of 20 to 90%) at a working temperature of 750°C to 1,000°C, followed by air-cooling at a cooling speed of 5 to 100°C/sec to cool to a temperature of 650°C or lower, and conducting the second high-temperature rolling (at a working ratio of 60 to 95%) at a working temperature of 400°C to 650°C.

The steps after the cold-rolling after the working via the above Step C, D, or E were conducted in the same manner as in Example 1, thereby to produce the respective test specimen of the copper alloy sheet material of Examples 2-1 to 2-20 according to the present invention and Comparative Example 2-1 to 2-9, and the resultant test specimens were subjected to examination of the properties in the same manner as in Example 1. The results are shown in Table 2.

Table 2

| ID number | Alloying elements | | | | Other elements | Production steps | |
|---|---|---|---|---|---|---|---|
| | Ni | Fe | Sn | P | | Kind of high-temp. rolling | Solution heat treatment |
| | mass% | mass% | mass% | mass% | mass% | | |
| Ex 2-1 | 0.82 | - | 1.08 | 0.05 | - | C | Not done |
| Ex 2-2 | - | - | 0.15 | 0.02 | - | C | Not done |
| Ex 2-3 | 0.21 | - | 0.15 | 0.03 | Zn=0.11 | D | Not done |
| Ex 2-4 | 0.92 | - | 0.47 | 0.08 | - | C | Done |
| Ex 2-5 | 0.62 | 0.75 | 0.23 | 0.06 | Mn=0.03, Ag=0.1, Ti=0.06 | C | Not done |
| Ex 2-6 | - | 2.32 | - | 0.08 | Zn=0.11 | C | Not done |
| Ex 2-7 | - | 0.11 | 1.81 | 0.03 | - | D | Not done |
| Ex 2-8 | - | 0.11 | - | 0.04 | - | D | Done |
| Ex 2-9 | 0.38 | 0.45 | 0.23 | 0.05 | Zr=0.03, B=0.09, Hf=0.03 | D | Not done |
| Ex 2-10 | 0.95 | - | 0.78 | 0.05 | - | C | Done |
| Ex 2-11 | - | 0.11 | - | 0.03 | - | D | Not done |
| Ex 2-12 | - | 1.02 | 0.97 | 0.18 | - | D | Done |
| Ex 2-13 | 2.21 | 1.45 | 0.35 | 0.25 | Co=0.21, Cr=0.18 | C | Done |
| Ex 2-14 | - | 0.42 | 0.15 | 0.08 | Mg=0.15, Zn=0.15 | D | Not done |
| Ex 2-15 | - | 0.12 | 0.21 | 0.02 | Mg=0.18, Zn=0.41 | D | Done |
| Ex 2-16 | 0.02 | 0.02 | - | 0.03 | - | D | Done |
| Ex 2-17 | 1.05 | - | 0.88 | 0.08 | - | D | Not done |
| Ex 2-18 | 1.21 | 1.62 | 0.21 | 0.12 | Si=0.03 | C | Not done |
| Ex 2-19 | 0.05 | 0.12 | 1.12 | 0.07 | - | D | Done |
| Ex 2-20 | 0.45 | - | - | 0.21 | - | C | Done |

Table 2 (continued)

| ID number | TD//(111) area ratio | Young's modulus in TD | Deflection factor in TD | YS in TD | EC | SR in TD |
|---|---|---|---|---|---|---|
| | % | GPa | GPa | MPa | %IACS | % |
| Ex 2-1 | 83 | 154 | 140 | 432 | 58.2 | 38.3 |
| Ex 2-2 | 89 | 155 | 142 | 281 | 84.1 | 53.2 |
| Ex 2-3 | 75 | 149 | 135 | 302 | 75.3 | 47.2 |
| Ex 2-4 | 83 | 152 | 138 | 489 | 44.6 | 23.4 |
| Ex 2-5 | 82 | 153 | 140 | 412 | 54.6 | 23.4 |
| Ex 2-6 | 59 | 138 | 123 | 515 | 63.2 | 45.6 |
| Ex 2-7 | 65 | 144 | 129 | 481 | 35.1 | 47.2 |
| Ex 2-8 | 73 | 148 | 134 | 321 | 90.2 | 51.3 |
| Ex 2-9 | 67 | 141 | 126 | 386 | 48.1 | 35.2 |
| Ex 2-10 | 83 | 154 | 140 | 510 | 38.6 | 21.3 |
| Ex 2-11 | 89 | 157 | 144 | 438 | 88.2 | 55.2 |
| Ex 2-12 | 93 | 161 | 148 | 542 | 45.3 | 52.3 |
| Ex 2-13 | 69 | 146 | 132 | 512 | 36.5 | 31.6 |
| Ex 2-14 | 75 | 149 | 135 | 460 | 80.2 | 32.0 |
| Ex 2-15 | 83 | 154 | 140 | 513 | 58.3 | 32.5 |
| Ex 2-16 | 89 | 159 | 146 | 253 | 95.2 | 58.9 |
| Ex 2-17 | 63 | 140 | 125 | 551 | 68.9 | 21.3 |
| Ex 2-18 | 57 | 139 | 124 | 521 | 38.4 | 32.1 |
| Ex 2-19 | 83 | 154 | 140 | 328 | 76.5 | 41.3 |
| Ex 2-20 | 94 | 160 | 147 | 415 | 51.2 | 51.3 |

Table 2 (continued)

| ID number | Alloying elements | | | | Other elements | Production steps | |
|---|---|---|---|---|---|---|---|
| | Ni mass% | Fe mass% | Sn mass% | P mass% | mass% | Kind of high-temp. rolling | Solution heat treatment |
| C Ex 2-1 | - | 0.01 | 0.02 | 0.04 | - | D | Done |
| C Ex 2-2 | 2.32 | 1.64 | 2.54 | 0.06 | - | C | Not done |
| C Ex 2-3 | 0.23 | 0.11 | 0.15 | 0.003 | - | D | Done |
| C Ex 2-4 | 0.52 | 0.74 | 0.21 | 0.35 | - | C | Done |
| C Ex 2-5 | - | 0.11 | - | 0.03 | Zn=1.22, Mg=0.28, Mn=0.89 | D | Not done |
| C Ex 2-6 | 1.05 | - | 0.88 | 0.08 | Co=0.52, Cr=0.46, Ti=1.08 | D | Not done |
| C Ex 2-7 | 1.05 | - | 0.88 | 0.08 | - | E | Done |
| C Ex 2-8 | - | 0.11 | - | 0.03 | - | E | Not done |
| C Ex 2-9 | - | 2.32 | - | 0.08 | Zn=0.11 | E | Done |

Table 2 (continued)

| ID number | TD//(111) area ratio % | Young's modulus in TD GPa | Deflection factor in TD GPa | YS in TD MPa | EC %IACS | SR in TD % |
|---|---|---|---|---|---|---|
| C Ex 2-1 | 56 | 137 | 122 | 162 | 88.3 | 75.9 |
| C Ex 2-2 | 61 | 141 | 126 | 589 | 11.6 | 41.1 |
| C Ex 2-3 | 67 | 144 | 129 | 187 | 76.8 | 65.3 |
| C Ex 2-4 | 58 | 139 | 124 | 387 | 18.4 | 55.3 |
| C Ex 2-5 | 61 | 141 | 126 | 163 | 16.7 | 35.6 |
| C Ex 2-6 | 63 | 142 | 127 | 403 | 15.3 | 18.9 |
| C Ex 2-7 | 35 | 126 | 110 | 535 | 66.3 | 22.3 |
| C Ex 2-8 | 41 | 130 | 114 | 415 | 87.3 | 54.3 |
| C Ex 2-9 | 43 | 132 | 116 | 495 | 61.5 | 44.3 |

As shown in Table 2, Examples 2-1 to 2-20 according to the present invention were excellent in the Young's modulus, the proof stress, the electrical conductivity, and the stress relaxation resistance.
On the contrary, when any of the requirements of the present invention was not satisfied, results were poor in any of the properties. That is, since Comparative Example 2-1 had a too small total amount of Ni, Fe, and Sn, the mechanical strength was poor. Since Comparative Example 2-2 had a too large total amount of Ni, Fe, and Sn, the electrical conductivity was poor. Since Comparative Example 2-3 had a too small amount of P, the mechanical strength was poor. Since Comparative Example 2-4 had a too large amount of P, the electrical conductivity was poor. Since Comparative Examples 2-5 to 2-6 each had a too large content of other elements, they were poor in the electrical conductivity. Comparative Examples 2-7 to 2-9 each were too low in the area ratio of the atomic planes in which (111) plane was oriented toward the TD, and were poor in the Young's modulus.

Example 3

The respective alloy containing elements in the column(s) of 'Alloying elements' and optionally Other elements' in Table 3, with the balance being Cu and unavoidable impurities, was melted in a high-frequency melting furnace, followed by casting, to obtain an ingot (w 100 mm × l 200 mm × t 40 mm).

Then, the resultant ingot was subjected to a homogenization heat treatment at 700 to 1,020°C for 10 minutes to 10 hours, followed by the first high-temperature rolling and the second high-temperature rolling in the Step C, D, or E, as in Example 2 above.

The steps after the cold-rolling after the working via the above Step C, D, or E were conducted in the same manner as in Example 1, thereby to produce the respective test specimen of the copper alloy sheet material of Examples 3-1 to 3-12 according to the present invention and Comparative Example 3-1 to 3-7, and the resultant test specimens were subjected to examination of the properties in the same manner as in Example 1. The results are shown in Table 3.

Table 3

| ID number | Alloying elements | | | Other elements | Production steps | |
|---|---|---|---|---|---|---|
| | Cr | Zr | Ti | | Kind of high-temp. rolling | Solution heat treatment |
| | mass% | mass% | mass% | mass% | | |
| Ex 3-1 | 0.27 | - | - | Sn=0.25, Zn=0.21 | D | Not done |
| Ex 3-2 | 0.18 | - | - | Sn=0.17, Zn=0.18 | D | Done |
| Ex 3-3 | - | 0.02 | - | - | D | Not done |
| Ex 3-4 | - | 0.10 | - | - | D | Not done |
| Ex 3-5 | 0.51 | - | 0.06 | Si=0.03, Ag=0.1, Fe=0.08 | C | Not done |
| Ex 3-6 | 0.31 | 0.09 | - | Si=0.02 | D | Not done |
| Ex 3-7 | 0.31 | - | 0.11 | Si=0.02 | C | Done |
| Ex 3-8 | 0.28 | - | - | Sn=0.78, Zn=0.45 | D | Not done |
| Ex 3-9 | 0.31 | 0.11 | - | Si=0.02 | D | Not done |
| Ex 3-10 | 0.31 | 0.11 | - | Mg=0.06, Co=0.08, Hf=0.04 | D | Done |
| Ex 3-11 | 0.31 | 0.11 | - | Mn=0.04, Ni=0.11, Fe=0.13 | D | Not done |
| Ex 3-12 | 0.52 | - | 0.05 | B=0.05, P=0.05, | C | Not done |
| C Ex 3-1 | 0.01 | 0.01 | 0.01 | - | D | Not done |
| C Ex 3-2 | 0.75 | 0.35 | 0.21 | - | D | Not done |
| C Ex 3-3 | 0.51 | - | 0.06 | Si=1.12, Ag=0.51, Fe=0.88 | C | Done |
| C Ex 3-4 | 0.31 | 0.11 | - | Mg=0.82, Co=0.85, Hf=0.46 | D | Not done |
| C Ex 3-5 | 0.27 | - | - | Sn=0.25, Zn=0.21 | E | Not done |
| C Ex 3-6 | 0.51 | - | 0.06 | Si=0.03, Ag=0.1, Fe=0.08 | E | Done |
| C Ex 3-7 | 0.31 | 0.09 | - | Si=0.02 | E | Not done |

Table 3 (continued)

| ID number | TD//(111) area ratio % | Young's modulus in TD GPa | Deflection factor in TD GPa | YS in TD MPa | EC %IACS | SR in TD % |
|---|---|---|---|---|---|---|
| Ex 3-1 | 78 | 153 | 139 | 545 | 80.2 | 45.0 |
| Ex 3-2 | 54 | 136 | 121 | 513 | 85.3 | 47.2 |
| Ex 3-3 | 68 | 142 | 127 | 352 | 97.2 | 22.3 |
| Ex 3-4 | 84 | 155 | 141 | 385 | 95.4 | 18.2 |
| Ex 3-5 | 81 | 156 | 142 | 567 | 78.6 | 18.6 |
| Ex 3-6 | 74 | 150 | 135 | 526 | 90.2 | 21.3 |
| Ex 3-7 | 59 | 142 | 127 | 421 | 76.4 | 22.5 |
| Ex 3-8 | 81 | 151 | 137 | 550 | 53.2 | 39.2 |
| Ex 3-9 | 89 | 156 | 142 | 510 | 80.2 | 20.2 |
| Ex 3-10 | 61 | 141 | 126 | 521 | 72.1 | 16.9 |
| Ex 3-11 | 76 | 151 | 137 | 531 | 68.5 | 18.6 |
| Ex 3-12 | 69 | 145 | 130 | 561 | 74.2 | 21.6 |
| C Ex 3-1 | 76 | 148 | 133 | 256 | 92.3 | 35.2 |
| C Ex 3-2 | 68 | 146 | 131 | 615 | 31.2 | 13.6 |
| C Ex 3-3 | 57 | 137 | 121 | 536 | 35.2 | 41.2 |
| C Ex 3-4 | 69 | 144 | 129 | 542 | 32.6 | 29.6 |
| C Ex 3-5 | 44 | 131 | 115 | 538 | 81.1 | 44.5 |
| C Ex 3-6 | 31 | 126 | 109 | 552 | 79.2 | 19.1 |
| C Ex 3-7 | 38 | 128 | 111 | 531 | 91.1 | 22.8 |

As shown in Table 3, Examples 3-1 to 3-12 according to the present invention were excellent in the Young's modulus, the proof stress, the electrical conductivity, and the stress relaxation resistance. On the contrary, when any of the requirements of the present invention was not satisfied, results were poor in any of the properties. That is, since Comparative Example 3-1 had a too small total amount of Cr, Zr, and Ti, the mechanical strength was poor. Since Comparative Example 3-2 had a too large total amount of Cr, Zr, and Ti, the electrical conductivity was poor. Since Comparative Examples 3-3 to 3-4 each had a too large content of other elements, they were poor in the electrical conductivity. Comparative Examples 3-5 to 3-7 each were too low in the area ratio of the atomic planes in which (111) plane was oriented toward the TD, and were poor in the Young's modulus.

Example 4

The respective alloy containing elements in the column(s) of 'Alloying elements' and optionally'Other elements' in Table 4, with the balance being Cu and unavoidable impurities, was melted in a high-frequency melting furnace, followed by casting, to obtain an ingot (w 100 mm × l 200 mm × t 40 mm).
Then, the resultant ingot was subjected to a homogenization heat treatment at 700 to 1,020°C for 10 minutes to 10 hours, followed by the first high-temperature rolling and the second high-temperature rolling in the Step A, B, or E, as in Example 1 above.
The steps after the cold-rolling after the working via the above Step A, B, or E were conducted in the same manner as in Example 1, thereby to produce the respective test specimen of the copper alloy sheet material of Examples 4-1 to 4-8 according to the present invention and Comparative Example 4-1 to 4-5, and the resultant test specimens were subjected to examination of the properties in the same manner as in Example 1. The results are shown in Table 4.
Table 4

| ID number | Alloying elements | | Other elements | Production steps | |
|---|---|---|---|---|---|
| | Be | Ni | | Kind of high-temp. rolling | Solution heat treatment |
| | mass% | mass% | mass% | | |
| Ex 4-1 | 1.91 | 0.12 | Fe=0.32, Co=0.06 | A | Done |
| Ex 4-2 | 2.75 | 0.12 | Fe=0.42, Co=0.12 | A | Done |
| Ex 4-3 | 1.91 | 0.12 | Fe=0.32, Co=0.06 | A | Not done |
| Ex 4-4 | 0.26 | 1.62 | Co=0.11, Al=0.45 | B | Not done |
| Ex 4-5 | 0.25 | 1.51 | Ag=0.15, Mn=0.05 | B | Done |
| Ex 4-6 | 0.52 | 2.15 | Cr=0.15, Zr=0.03 | A | Not done |
| Ex 4-7 | 0.37 | 2.34 | Hf=0.03, Fe=0.15 | B | Done |
| Ex 4-8 | 0.37 | 2.34 | Mg=0.12, P=0.03, B=0.03 | A | Not done |
| C Ex 4-1 | 0.06 | 0.02 | Fe=0.32, Co=0.06 | B | Not done |
| C Ex 4-2 | 3.23 | 0.65 | Co=0.11, Al=0.45 | A | Done |
| C Ex 4-3 | 1.91 | 0.12 | Fe=1.62, Co=0.72 | A | Done |
| C Ex 4-4 | 1.91 | 0.12 | Fe=0.32, Co=0.06 | E | Done |
| C Ex 4-5 | 0.26 | 1.62 | Co=0.11, Al=0.45 | E | Not done |

Table 4 (continued)

| ID number | TD//(111) area ratio % | Young's modulus in TD GPa | Deflection factor in TD GPa | YS in TD MPa | EC %IACS | SR in TD % |
|---|---|---|---|---|---|---|
| Ex 4-1 | 56 | 137 | 122 | 863 | 26.5 | 22.6 |
| Ex 4-2 | 61 | 141 | 127 | 1,057 | 22.1 | 25.0 |
| Ex 4-3 | 75 | 147 | 133 | 925 | 20.3 | 30.1 |
| Ex 4-4 | 81 | 151 | 138 | 736 | 40.2 | 26.3 |
| Ex 4-5 | 63 | 142 | 128 | 723 | 58.2 | 22.2 |
| Ex 4-6 | 91 | 156 | 143 | 775 | 52.3 | 26.7 |
| Ex 4-7 | 53 | 136 | 121 | 803 | 30.1 | 21.3 |
| Ex 4-8 | 67 | 144 | 130 | 781 | 38.2 | 18.9 |
| C Ex 4-1 | 67 | 143 | 129 | 515 | 51.2 | 26.3 |
| C Ex 4-2 | 55 | 137 | 122 | 1,015 | 12.3 | 21.3 |
| C Ex 4-3 | 59 | 141 | 127 | 887 | 10.3 | 26.3 |
| C Ex 4-4 | 35 | 125 | 109 | 933 | 20.1 | 24.6 |
| C Ex 4-5 | 41 | 128 | 112 | 722 | 38.5 | 28.3 |

As shown in Table 4, Examples 4-1 to 4-8 according to the present invention were excellent in the Young's modulus, the proof stress, the electrical conductivity, and the stress relaxation resistance. On the contrary, when any of the requirements of the present invention was not satisfied, results were poor in any of the properties. That is, since Comparative Example 4-1 had a too small total amount of Be and Ni, the mechanical strength was poor. Since Comparative Example 4-2 had a too large total amount of Be and Ni, the electrical conductivity was poor. Since Comparative Example 4-3 had a too large content of other elements, they were poor in the electrical conductivity. Comparative Examples 4-4 to 4-5 each were too low in the area ratio of the atomic planes in which (111) plane was oriented toward the TD, and were poor in the Young's modulus.

Example 5

The respective alloy containing elements in the column(s) of 'Alloying elements' and optionally 'Other elements' in Table 5, with the balance being Cu and unavoidable impurities, was melted in a high-frequency melting furnace, followed by casting, to obtain an ingot (w 100 mm × l 200 mm × t 40 mm).
Then, the resultant ingot was subjected to a homogenization heat treatment at 700 to 1,020°C for 10 minutes to 10 hours, followed by the first high-temperature rolling and the second high-temperature rolling in the Step C, D, or E, as in Example 2 above.
The steps after the cold-rolling after the working via the above Step C, D, or E were conducted in the same manner as in Example 1, thereby to produce the respective test specimen of the copper alloy sheet material of Examples 5-1 to 5-6 according to the present invention and Comparative Example 5-1 to 5-5, and the resultant test specimens were subjected to examination of the properties in the same manner as in Example 1. The results are shown in Table 5.
Table 5

| ID number | Alloying elements | | Other elements | Production steps | |
| | Mg mass% | P mass% | mass% | Kind of high-temp. rolling | Solution heat treatment |
|---|---|---|---|---|---|
| Ex 5-1 | 1.65 | 0.06 | Sn=0.12, Zn=0.23, Ti=0.08 | C | Done |
| Ex 5-2 | 0.81 | 0.04 | Zr=0.02, Hf=0.03, Cr=0.12 | D | Not done |
| Ex 5-3 | 1.12 | 0.04 | Co=0.21, Mn=0.12 | D | Done |
| Ex 5-4 | 1.31 | 0.05 | - | C | Done |
| Ex 5-5 | 0.68 | 0.03 | - | C | Not done |
| Ex 5-6 | 0.45 | 0.04 | Ag=0.12, B=0.05, Fe=0.12 | C | Done |
| C Ex 5-1 | 0.25 | 0.02 | - | C | Done |
| C Ex 5-2 | 2.21 | 0.12 | - | C | Not done |
| C Ex 5-3 | 0.68 | 0.03 | Sn=0.55, Zn=0.82, Ti=0.72 | C | Done |
| C Ex 5-4 | 1.31 | 0.05 | - | E | Done |
| C Ex 5-5 | 0.68 | 0.03 | - | E | Done |

Table 5 (continued)

| ID number | TD//(111) area ratio % | Young's modulus in TD GPa | Deflection factor in TD GPa | YS in TD MPa | EC %IACS | SR in TD % |
|---|---|---|---|---|---|---|
| Ex 5-1 | 59 | 143 | 129 | 589 | 48.2 | 21.6 |
| Ex 5-2 | 62 | 138 | 123 | 512 | 55.8 | 19.6 |
| Ex 5-3 | 53 | 136 | 121 | 532 | 53.5 | 18.3 |
| Ex 5-4 | 78 | 153 | 140 | 545 | 56.3 | 22.3 |
| Ex 5-5 | 86 | 156 | 143 | 522 | 61.2 | 23.4 |
| Ex 5-6 | 61 | 141 | 127 | 467 | 62.1 | 24.3 |
| C Ex 5-1 | 67 | 144 | 130 | 315 | 65.2 | 42.2 |
| C Ex 5-2 | 88 | 154 | 141 | 665 | 35.6 | 16.7 |
| C Ex 5-3 | 68 | 142 | 128 | 521 | 32.1 | 18.9 |
| C Ex 5-4 | 41 | 127 | 111 | 532 | 55.6 | 23.2 |
| C Ex 5-5 | 32 | 125 | 109 | 527 | 62.3 | 21.8 |

As shown in Table 5, Examples 5-1 to 5-6 according to the present invention were excellent in the Young's modulus, the proof stress, the electrical conductivity, and the stress relaxation resistance. On the contrary, when any of the requirements of the present invention was not satisfied, results were poor in any of the properties. That is, since Comparative Example 5-1 had a too small total amount of Mg and P, the mechanical strength was poor. Since Comparative Example 5-2 had a too large total amount of Mg and P, the electrical conductivity was poor. Since Comparative Example 5-3 had a too large content of other elements, they were poor in the electrical conductivity. Comparative Examples 5-4 to 5-5 each were too low in the area ratio of the atomic planes in which (111) plane was oriented toward the TD, and were poor in the Young's modulus.

Example 6

The respective alloy containing elements in the column(s) of 'Alloying elements' and optionally 'Other elements' in Table 6, with the balance being Cu and unavoidable impurities, was melted in a high-frequency melting furnace, followed by casting, to obtain an ingot (w 100 mm × l 200 mm × t 40 mm).
Then, the resultant ingot was subjected to a homogenization heat treatment at 700 to 1,020°C for 10 minutes to 10 hours, followed by the first high-temperature rolling and the second high-temperature rolling in the Step A, B, or E, as in Example 1 above.

The steps after the cold-rolling after the working via the above Step A, B, or E were conducted in the same manner as in Example 1, thereby to produce the respective test specimen of the copper alloy sheet material of Examples 6-1 to 6-11 according to the present invention and Comparative Example 6-1 to 6-5, and the resultant test specimens were subjected to examination of the properties in the same manner as in Example 1. The results are shown in Table 6.

Table 6

| ID number | Alloying elements | | Other elements | Production steps | |
|---|---|---|---|---|---|
| | Ti mass% | Fe mass% | mass% | Kind of high-temp. rolling | Solution heat treatment |
| Ex 6-1 | 3.12 | 0.15 | Zn=0.42, Ag=0.12 | A | Done |
| Ex 6-2 | 3.46 | - | - | A | Done |
| Ex 6-3 | 2.95 | - | - | A | Done |
| Ex 6-4 | 3.21 | - | - | A | Done |
| Ex 6-5 | 1.81 | 0.21 | - | A | Done |
| Ex 6-6 | 3.15 | 0.12 | - | B | Done |
| Ex 6-7 | 1.81 | 0.12 | Mg=0.12, Ni=1.72 | A | Not done |
| Ex 6-8 | 3.12 | 0.34 | B=0.04,Mn=0.12 | A | Done |
| Ex 6-9 | 2.88 | 0.45 | Si=0.32, Cr=0.33, Sn=0.11 | A | Not done |
| Ex 6-10 | 2.76 | 0.18 | Co=0.12, Zr=0.05 | A | Done |
| Ex 6-11 | - | 1.71 | P=0.07 | A | Not done |
| C Ex 6-1 | 1.21 | 0.05 | - | A | Done |
| C Ex 6-2 | 4.56 | 0.44 | - | A | Not done |
| C Ex 6-3 | 3.11 | - | Mg=0.52, Ni=1.83 | A | Done |
| C Ex 6-4 | 1.81 | - | - | E | Done |
| C Ex 6-5 | 3.15 | 0.21 | - | E | Done |

Table 6 (continued)

| ID number | TD/(111) area ratio % | Young's modulus in TD GPa | Deflection factor in TD GPa | YS in TD MPa | EC %IACS | SR in TD % |
|---|---|---|---|---|---|---|
| Ex 6-1 | 53 | 139 | 125 | 930 | 11.5 | 7.4 |
| Ex 6-2 | 58 | 143 | 129 | 981 | 10.7 | 6.1 |
| Ex 6-3 | 72 | 149 | 136 | 851 | 9.9 | 5.3 |
| Ex 6-4 | 78 | 154 | 140 | 823 | 11.0 | 5.6 |
| Ex 6-5 | 60 | 144 | 130 | 851 | 20.1 | 8.2 |
| Ex 6-6 | 87 | 159 | 146 | 921 | 10.5 | 6.1 |
| Ex 6-7 | 51 | 138 | 124 | 845 | 9.6 | 5.2 |
| Ex 6-8 | 64 | 146 | 133 | 965 | 10.3 | 6.2 |
| Ex 6-9 | 75 | 145 | 131 | 879 | 8.2 | 5.9 |
| Ex 6-10 | 68 | 138 | 123 | 924 | 11.3 | 4.6 |
| Ex 6-11 | 71 | 141 | 127 | 587 | 52.1 | 37.2 |
| C Ex 6-1 | 71 | 145 | 131 | 625 | 16.2 | 11.5 |
| C Ex 6-2 | 76 | 151 | 138 | 981 | 3.4 | 4.2 |
| C Ex 6-3 | 60 | 142 | 128 | 766 | 4.3 | 4.4 |
| C Ex 6-4 | 46 | 128 | 112 | 835 | 21.2 | 7.8 |
| C Ex 6-5 | 36 | 124 | 108 | 935 | 11.6 | 6.8 |

As shown in Table 6, Examples 6-1 to 6-11 according to the present invention were excellent in the Young's modulus, the proof stress, the electrical conductivity, and the stress relaxation resistance. On the contrary, when any of the requirements of the present invention was not satisfied, results were poor in any of the properties. That is, since Comparative Example 6-1 had a too small total amount of Ti and Fe, the mechanical strength was poor. Since Comparative Example 6-2 had a too large total amount of Ti and Fe, the electrical conductivity was poor. Since Comparative Example 6-3 had a too large content of other elements, they were poor in the electrical conductivity. Comparative Examples 6-4 to 6-5 each were too low in the area ratio of the atomic planes in which (111) plane was oriented toward the TD, and were poor in the Young's modulus.

Example 7

The respective alloy containing elements in the column(s) of 'Alloying elements' and optionally 'Other elements' in Table 7, with the balance being Cu and unavoidable impurities, was melted in a high-frequency melting furnace, followed by casting, to obtain an ingot (w 100 mm × l 200 mm × t 40 mm). Then, the resultant ingot was subjected to a homogenization heat treatment at 700 to 1,020°C for 10 minutes to 10 hours, followed by the first high-temperature rolling (at a working ratio of 20 to 90%) at a working temperature of 800°C to 1,000°C, followed by water-cooling at a cooling speed of 5 to 100°C/sec to quench to room temperature, re-heating to 650°C, and conducting the second high-temperature rolling at a working temperature of 450°C to 650°C. The conditions of the shape ratio, strain rate, and total working ratio of the second high-temperature rolling, are shown in Table 8. With respect to the sheet thicknesses after the respective passes, which are necessary for the calculation of the shape ratio and strain rate, the values at the roll intervals were utilized, instead of values actually measured.
Then, the resultant sheet was subjected to cold-rolling at a working ratio of 50 to 99%, and then, in some Examples according to the present invention and Comparative Examples, followed by a solution heat treatment by maintaining at 700°C to 1,020°C for 3 seconds to 10 minutes. The temperature raising speed and cooling speed before and after the solution heat treatment each were 1 to 100°C/sec. Whether the solution heat treatment was done or not done is shown in Table 8. Then, the resultant sheet was subjected to a heat treatment by maintaining at 250 to 650°C for 5 minutes to 20 hours, followed by finish rolling at room temperature at a working ratio of 2 to 60%, and temper annealing at 300 to 700°C for 10 seconds to 2 hours, thereby to produce the respective test specimen of the copper alloy sheet material (t 0.15 mm) of Examples 7-1 to 7-6 according to the present invention and Comparative Examples 7-1 to 7-5.

Table 7

| Ni | Co | Si | Zn | Sn | Mg | Cr |
|---|---|---|---|---|---|---|
| 2.72 | 0.45 | 0.65 | 0.32 | 0.12 | 0.07 | 0.18 |

Table 8

| ID number | Conditions in high-temp. rolling | | | Solution heat treatment |
|---|---|---|---|---|
| | Shape ratio | Strain rate | Working ratio | |
| | | 1/sec | (%) | |
| Ex 7-1 | 0.6 to 1.7 | 0.8 to 20.5 | 75 | Done |
| Ex 7-2 | 0.6 to 1.5 | 0.8 to 17.0 | 69 | Done |
| Ex 7-3 | 1.9 to 3.3 | 12.5 to 21.8 | 74 | Done |
| Ex 7-4 | 2.3 to 3.3 | 15.6 to 22.3 | 81 | Not done |
| Ex 7-5 | 1.2 to 3.1 | 1.2 to 41 | 65 | Not done |
| Ex 7-6 | 1.7 to 3.1 | 1.1 to 62 | 88 | Not done |
| C Ex 7-1 | 3.7 to 4.5 | 0.8 to 17.0 | 69 | Done |
| C Ex 7-2 | 0.6 to 1.5 | 0.2 to 0.4 | 69 | Work cracked upon the warm rolling |
| C Ex 7-3 | 0.6 to 1.5 | 0.8 to 17.0 | 54 | Done |
| C Ex 7-4 | 3.7 to 4.5 | 0.8 to 17.0 | 69 | Not done |
| C Ex 7-5 | 0.6 to 1.5 | 0.8 to 17.0 | 54 | Not done |

Table 8 (continued)

| ID number | TD//(111) area ratio | Young's modulus in TD | Deflection factor in TD | YS in TD | EC | SR in TD |
|---|---|---|---|---|---|---|
| | % | GPa | GPa | MPa | %IACS | % |
| Ex 7-1 | 58 | 138 | 122 | 755 | 38.1 | 17.2 |
| Ex 7-2 | 72 | 142 | 128 | 785 | 37.8 | 18.3 |
| Ex 7-3 | 61 | 141 | 125 | 824 | 37.6 | 16.5 |
| Ex 7-4 | 85 | 147 | 132 | 764 | 37.0 | 16.3 |
| Ex 7-5 | 67 | 141 | 125 | 788 | 36.7 | 16.2 |
| Ex 7-6 | 88 | 151 | 135 | 832 | 38.1 | 15.3 |
| C Ex 7-1 | 23 | 127 | 110 | 785 | 37.1 | 17.3 |
| C Ex 7-2 | Work cracked upon the warm rolling | | | | | |
| C Ex 7-3 | 26 | 126 | 110 | 788 | 38.3 | 18.3 |
| C Ex 7-4 | 37 | 131 | 114 | 765 | 38.5 | 18.9 |
| C Ex 7-5 | 46 | 133 | 117 | 766 | 37.4 | 17.6 |

As shown in Table 8, when the conditions of the shape ratio, strain rate, and working ratio in the second high-temperature rolling were within the preferable ranges of the present invention, Examples each were excellent in the Young's modulus, proof stress, electrical conductivity, and stress relaxation resistance. Contrary to the above, when any of the conditions did not satisfy these preferable working conditions of the second high-temperature rolling, any of the resultant properties were poor. That is, Comparative Examples 7-1 to 7-5 each were too low in the area ratio of the atomic planes in which (111) plane was oriented toward the TD, and were poor in the Young's modulus.

Similarly to those of the Cu-(Ni, Co)-Si-based alloy shown in the above Example 7 (Table 7, Table 8), other alloy systems according to the present invention, i.e. Cu-(Cr, Zr, Ti)-based alloy, Cu-(Be, Ni)-based alloy, Cu-(Ni, Fe, Sn)-P-based alloy, Cu-Mg-P-based alloy, and Cu-Ti-Fe-based alloy, each were excellent in the Young's modulus, proof stress, electrical conductivity, and stress relaxation resistance, when the conditions of the shape ratio, strain rate, and working ratio in the second high-temperature rolling were within the preferable ranges of the present invention. On the other hand, when any of the conditions did not satisfy these preferable working conditions of the second high-temperature rolling, the area ratio of the atomic planes in which the (111) plane was oriented toward the TD was low, and the Young's modulus was poor as one of the properties thereof.

Apart from these, in order to clarify the difference between copper alloy sheet materials produced under the conventional production conditions and the copper alloy sheet material according to the present invention, copper alloy sheet materials were produced under the conventional production conditions, and evaluations of the same characteristic items as described above were conducted. The working ratio was adjusted so that, unless otherwise specified, the thickness of the respective sheet material would be the same as the thickness in the Examples described above.

In the case where the specific conditions for the hot-rolling, specifically, the conditions for the second high-temperature rolling in the present invention, are unclear in the descriptions of the conventional production conditions, it is presumed that the hot-rolling was conducted for a general purpose, to lower the work energy required for the rolling by conducting the said rolling at a higher temperature, as described in paragraph [0035] of this specification, and no high-temperature rolling of two stages in the present invention was conducted, which could be a combination of the first high-temperature rolling and the second high-temperature rolling.

(Comparative Example 101) ... The conditions of Example 1 in JP-A-2009-132965

Using oxygen-free copper as a base material, a copper alloy having a composition containing Cr 0.2 mass% and Zr 0.1 mass% was melted in a high-frequency melting furnace, followed by casting the resultant molten metal to obtain an ingot with thickness 25 mm, width 30 mm, and length 150 mm. The thus-obtained ingot was heated to 950°C, and subjected to hot-rolling to thickness 8 mm, followed by cold-rolling to thickness 1 mm, and annealing at 800°C. Then, the thus-obtained sheet was subjected to cold working at a working degree of 40% and then to a heat treatment at 500°C for 1 minute, which were repeatedly conducted three times, thereby to prepare a metal sheet material with thickness 0.22 mm, which was utilized as Sample specimen c01.

The thus-obtained Sample specimen c01 was different from those in the above Examples according to the present invention in the production conditions, in that no high-temperature rolling of two stages was conducted. The results were that the Sample specimen c01 had the area ratio of TD//(1 1 1) of 50% or less, and that it did not satisfy the properties required in the present invention on the Young's modulus in the TD and the deflection factor in the TD.

(Comparative Example 102) ··· The conditions of Example 1 in JP-A-2008-297617

A copper alloy having a composition containing Be 1.91 mass%, Ni 0.14 mass%, Fe 0.04 mass%, and Co 0.30 mass%, with the balance being copper, was melted, followed by casting by using a vertical-type semi-continuous casting machine. The thus-obtained ingot (thickness 60 mm) was heated to a temperature (820 to 900°C, depending on the alloy composition) that was lower by 30°C or more than the solidus line, followed by subjecting to extraction, and hot-rolling was started. The solidus temperatures had been figured out in advance by conducting preliminary experiments on the alloys of the respective compositions. In the hot-rolling, the pass schedule was preset so that the rolling ratio in a temperature region of 700°C or more would become 60% or more, and that the rolling would be conducted at a rolling reduction ratio of 44% even in a temperature region of lower than 700°C. The final pass temperature of the hot-rolling was from 600°C to 400°C. The total hot-rolling ratio from the ingot was about 90%. The specific conditions for the high-temperature rolling at the temperature region of lower than 700°C was unclear from the above-mentioned publication; thus, the high-temperature rolling was conducted by adopting conditions of a shape ratio of 3.7 to 4.5 and a strain rate of 0.8 to 17.0/sec, which were general conditions at the time of the filing of the present application.

After the hot-rolling, the oxidized layer on the surface layer was removed by mechanical polishing (scalping). The resultant sheet was then subjected to cold-rolling at a rolling ratio of 82%, followed by subjecting to a solution treatment. In the solution treatment, the temperature reached was adjusted within the range of 700 to 850°C depending on the alloy composition so that the average grain size (the twin boundary was not deemed as the grain boundary) after the solution treatment would become 10 to 40 μm, and the retention time period in the temperature region of 700 to 850°C was adjusted within the range of 10 seconds to 10 minutes. Then, the resultant sheet material after the solution treatment was subjected to finish cold-rolling at a rolling ratio of 20%. Where necessary, scalping was conducted in the mid course, to set the sheet thickness to 0.2 mm. For the sample specimen as "a material that has not been subjected to any aging", the sheet material at this stage was utilized.

With respect to the thus-obtained sheet material with sheet thickness 0.2 mm, aging experiments at a temperature range of 300 to 500°C up to 5 hours at the highest were conducted as preliminary experiments, to figure out the aging conditions to give the maximum hardness (the aging temperature therefor is defined as $T_m$ (°C), and the aging time period thereof is defined as $t_m$ (min)) depending on the alloy composition.

The sheet material of this alloy (the material that had not been subjected to any aging) was subjected to aging at an aging temperature $T_m$ (320°C) for an aging time period $t_m$ (120 minutes), to give a sample specimen of "an age-hardened material". This was utilized as Sample specimen c02-1.

Further, on the assumption of a case of shipping as a mill-hardened material, a sheet material of this alloy (the finish cold-rolling ratio was changed to 10%, in the above material that had not been subjected to any aging) was subjected to aging to the extent so that the maximum hardness would not be attained, which was utilized as a sample specimen. The conditions for the aging were in the range of an aging temperature Tm (320°C) and an aging time period of 0.1 tm or more and lower than tm (20 minutes). This was utilized as Sample specimen c02-2.

The thus-obtained Sample specimens c02-1 and c02-2 were different from those in the above Examples according to the present invention in the production conditions, in that the rolling reduction ratio in the high-temperature rolling of the second stage was too low, among the high-temperature rolling of two stages, and that the high-temperature rolling was not conducted at the specific shape ratio. The results were that the Sample specimens c02-1 and c02-2 each had the area ratio of the TD//(1 1 1) of 50% or less, and that they did not satisfy the properties required in the present invention on the Young's modulus in the TD and the deflection factor in the TD.

(Comparative Example 103) ··· The conditions of Examples (Ingot No. A - Sample No. 5, Ingot No. O - Sample No. 18) in Table 2 in JP-A-2006-009137

A copper alloy having a composition containing Ni 3.8 mass%, Si 0.89 mass%, and S 0.002 mass%, with the balance being copper (Ingot No. A described in Table 1 of the above-mentioned publication), and a copper alloy having a composition containing Ni 3.8 mass%, Si 0.89 mass%, Mg 0.1 mass%, Sn 0.15 mass%, Zn 0.5 mass%, Co 0.25 mass%, and S 0.002 mass%, with the balance being copper (Ingot No. O described in Table 1 of the above-mentioned publication), were respectively melted in a high-frequency melting furnace, followed by casting the respective resultant molten metal by a DC method, to give an ingot with thickness 30 mm, width 100 mm, and length 150 mm, respectively. Then, the respective ingot was heated to 1,000°C, and maintained at this temperature for 1 hour, followed by hot rolling to a thickness of 12 mm, and then cooling immediately.

Then, the surfaces of the respective thus-hot-rolled sheet was scalped in 1.5 mm each, to remove the oxidized layer, followed by working to a thickness of 0.15 to 0.25 mm by cold-rolling (A), subjecting to a heat treatment for 15 seconds while changing the solution treatment temperature in the temperature range of 825 to 925°C, and then immediately cooling at a cooling speed of 15°C/sec or more. Then, the resultant respective sheet was subjected to aging at 475°C for 2 hours in an inert gas atmosphere, followed by subjecting to cold-rolling (C) of final plastic working, thereby to set the final sheet thickness. After the final plastic working, the resultant respective sheet was then subjected to low-temperature annealing at 375°C for 2 hours, thereby to produce the respective copper alloy sheet material. The thus-obtained sheets were utilized as Sample specimens c03-1 and c03-2.

The thus-obtained Sample specimens c03-1 and c03-2 were different from those in the above Examples according to the present invention in production conditions, in that no high-temperature rolling of two stages was conducted. The results were that the Sample specimens c03-1 and c03-2 each had an area ratio of TD//(1 1 1) of 50% or less, and that they did not satisfy the properties required in the present invention on the Young's modulus in the TD and the deflection factor in the TD.

(Comparative Example 104) ··· The conditions of Example 5 in JP-A-2008-231492

A copper alloy having a composition containing Ni 0.86 mass%, Sn 1.26 mass%, P 0.10 mass%, and Fe 0.15 mass%, with the balance being copper, was melted, followed by casting by using a vertical-type continuous casting machine. From the thus-obtained ingot (thickness 180 mm), a sample with thickness 60 mm was cut out, followed by heating to 950°C, and subjecting to extraction, and hot-rolling was started. In the hot-rolling, the pass schedule was preset so that the rolling ratio in a temperature region of 950°C to 700°C would become 60% or more, and that the rolling would be conducted at a rolling reduction ratio of 45% even in a temperature region of lower than 700°C. The final pass temperature of the hot-rolling was from 600°C to 400°C. The total hot-rolling ratio from the ingot was about 80 to 90%.

The specific conditions for the high-temperature rolling at the temperature region of lower than 700°C was unclear from the above-mentioned publication; thus, the high-temperature rolling was conducted by adopting conditions of a shape ratio of 3.7 to 4.5 and a strain rate of 0.8 to 17.0/sec, which were general conditions at the time of the filing of the present application.

After the hot-rolling, the oxidized layer on the surface layer was removed by mechanical polishing (scalping). The resultant sheet was then subjected to cold-rolling at a rolling ratio of 90%, followed by subjecting to recrystallization annealing. In the recrystallization annealing, the temperature reached was adjusted within the range of 600 to 750°C depending on the alloy composition so that the average grain size (the twin boundary was not deemed as the grain boundary) after the recrystallization annealing would become 5 to 40 $\mu$m, and the retention time period in the temperature region of 600 to 750°C was adjusted within the range of 10 seconds to 600 minutes. Then, the resultant sheet material after the recrystallization annealing was not subjected to any aging, but subjected to finish cold-rolling at a rolling ratio of 65%. Then, low-temperature annealing in which the resultant sheet material was placed in a furnace at 400°C for 5 minutes was further conducted. In the above manner, a sample specimen was obtained. Where necessary, scalping was conducted in the mid course, to set the sheet thickness of the sample specimen to 0.15 mm. This was utilized as Sample specimen c04.

The thus-obtained Sample specimen c04 was different from those in the above Examples according to the present invention in the production conditions, in that the rolling reduction ratio in the high-temperature rolling of the second stage was too low, among the high-temperature rolling of two stages, and that the high-temperature rolling was not conducted at the specific shape ratio. The results were that the Sample specimen c04 had the area ratio of the TD//(1 1 1) of 50% or less, and that it did not satisfy the properties required in the present invention on the Young's modulus in the TD and the deflection factor in the TD.

(Comparative Example 105) ··· The conditions of Example 1 in JP-A-2009-228013

A copper alloy containing 0.66 mass% of Mg and 0.04 mass% of P, with the balance being Cu, was melted, followed by casting by using a vertical-type small-size continuous casting machine, to give an ingot with thickness 50 mm. The thus-obtained ingot was heated to 900°C, followed by subjecting to extraction, and hot-rolling was started. In the hot-rolling, the pass schedule was preset so that the rolling ratio in a temperature region of 900°C to 600°C would become 60% or more, and that the rolling would be conducted even in a temperature region of lower than 600°C. The hot-rolling ratio in a temperature region of lower than 600°C but not lower that 300°C was set to 48%, and the final pass temperature of the hot-rolling was from 500°C to 300°C. The total hot-rolling ratio from the ingot was about 90%. The specific conditions for the high-temperature rolling at the temperature region of lower than 600°C was unclear from the above-mentioned publication; thus, the high-temperature rolling was conducted by adopting conditions of a shape ratio of 3.7 to 4.5 and a strain rate of 0.8 to 17.0/sec, which were general conditions at the time of the filing of the present application.

After the hot-rolling, the oxidized layer on the surface layer was removed by mechanical polishing (scalping). The resultant sheet was then subjected to cold-rolling at a rolling ratio of 92%, followed by subjecting to recrystallization annealing at 400 to 700°C. The temperature change in the recrystallization annealing was monitored, with a thermocouple attached to the surface of the sample. In the recrystallization annealing, the temperature reached was adjusted within the range of 400 to 700°C depending on the alloy composition so that the average grain size (the twin boundary was not deemed as the grain boundary) after the recrystallization annealing would become 10 to 30 $\mu$m, and the retention time period in the temperature region of 400 to 700°C was adjusted within the range of 10 seconds to 30 minutes.

Then, the resultant sheet material after the recrystallization annealing was subjected to finish cold-rolling at a rolling ratio of 35%, followed by low-temperature annealing in which the resultant sheet material was placed in a furnace at 300°C for 5 minutes.

In the above manner, a copper alloy sheet material was obtained. Where necessary, scalping was conducted in the mid course, to set the sheet thickness of the copper alloy sheet material to 0.3 mm. This was utilized as Sample specimen c05. The thus-obtained Sample specimen c05 was different from those in the above Examples according to the present invention in the production conditions, in that the rolling reduction ratio in the high-temperature rolling of the second stage was too low, among the high-temperature rolling of two stages, and that the high-temperature rolling was not conducted at the specific shape ratio. The results were that the Sample specimen c05 had the area ratio of the TD//(1 1 1) of 50% or less, and that it did not satisfy the properties required in the present invention on the Young's modulus in the TD and the deflection factor in the TD.

(Comparative Example 106) ··· The conditions of Example 1 in JP-A-201 0-126777

A copper alloy containing 3.18 mass% of Ti, with the balance being Cu, was melted, followed by casting by using a vertical-type semi-continuous casting machine, to give an ingot with thickness 60 mm.
The thus-obtained ingot was heated to 950°C, followed by subjecting to extraction, and hot-rolling was started. In the hot-rolling, the pass schedule was preset so that the rolling ratio in a temperature region of 750°C or more would become 60% or more, and that the rolling would be conducted even in a temperature region of lower than 700°C. The hot-rolling ratio in a temperature region of lower than 700°C but not lower that 500°C was set to 42%, and the final pass temperature of the hot-rolling was from 600°C to 500°C. The total hot-rolling ratio from the ingot was about 95%. After the hot-rolling, the oxidized layer on the surface layer was removed by mechanical polishing (scalping). The specific conditions for the high-temperature rolling at the temperature region of lower than 700°C was unclear from the above-mentioned publication; thus, the high-temperature rolling was conducted by adopting conditions of a shape ratio of 3.7 to 4.5 and a strain rate of 0.8 to 17.0/sec, which were general conditions at the time of the filing of the present application.

The resultant sheet was then subjected to cold-rolling at a rolling ratio of 98%, followed by subjecting to a solution treatment. In the solution treatment, a heat treatment was conducted by setting the temperature reached to a temperature higher by 30°C or more than the solid-solution line of the alloy composition in a temperature region of 750 to 1,000°C depending on the alloy composition so that the average grain size (the twin boundary was not deemed as the grain boundary) after the solution treatment would become 5 to 25 $\mu$m, and the retention time period was adjusted within the range of 5 seconds to 5 minutes. Specifically, the heat treatment was conducted at 900°C for 15 seconds.

Then, the resultant sheet material after the solution treatment was subjected to cold-rolling at a rolling ratio of 15%.

With respect to the thus-obtained sheet material, aging experiments at a temperature range of 300 to 550°C up to 24 hours at the highest were conducted as preliminary experiments, to figure out the aging conditions to give the maximum hardness (i.e. the aging temperature $T_M$ (°C), and the aging time period $t_M$ (min), the maximum hardness $H_M$ (HV)) depending on the alloy composition. Further, the aging temperature was set to a temperature within the range of $T_M \pm 10$°C, and the aging time period was set to a time period that was shorter than $t_M$ and would give a hardness after the aging of 0.90 $H_M$ to 0.95 $H_M$.

Then, the resultant sheet material after the aging was subjected to finish cold-rolling at a rolling ratio of 10%, followed by low-temperature annealing in which the resultant sheet material was maintained in an annealing furnace at 450°C for 1 minute.

In the above manner, a copper alloy sheet material was obtained. Where necessary, scalping was conducted in the mid course, to set the sheet thickness of the copper alloy sheet material to 0.15 mm. This was utilized as Sample specimen c06. The thus-obtained Sample specimen c06 was different from those in the above Examples according to the present invention in the production conditions, in that the rolling reduction ratio in the high-temperature rolling of the second stage was too low, among the high-temperature rolling of two stages, and that the high-temperature rolling was not conducted at the specific shape ratio. The results were that the Sample specimen c06 had the area ratio of the TD//(1 1 1) of 50% or less, and that it did not satisfy the properties required in the present invention on the Young's modulus in the TD and the deflection factor in the TD.

As described in the above, according to the present invention, quite favorable characteristics can be realized, which are required, for example, of sheet materials for vehicle-mounted parts, such as connector materials, and sheet materials for electrical/electronic equipments (particularly, substrate material for the same).

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2010-190859 filed in Japan on August 27, 2010, which is entirely herein incorporated by reference.

REFERENCE SIGNS LIST

| | |
|---|---|
| 1 | Test specimen with an initial stress applied thereon |
| 2 | Test specimen after removing the load |
| 3 | Test specimen without any stress applied thereon |
| 4 | Test bench |

Claims

1. A copper alloy sheet material, having an alloy composition comprising any one, two, or three of Cr, Zr, and Ti in an amount of 0.05 to 1.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**2.** A copper alloy sheet material, having an alloy composition comprising any one, two, or three of Cr, Zr, and Ti in an amount of 0.05 to 1.0 mass% in total, and at least one selected from the group consisting of Sn, Zn, Si, Ag, Mn, B, P, Mg, Ni, Fe, Co, and Hf in an amount of 0:005 to 2.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**3.** A copper alloy sheet material, having an alloy composition comprising any one or both of Be and Ni in an amount of 0.1 to 3.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**4.** A copper alloy sheet material, having an alloy composition comprising any one or both of Be and Ni in an amount of 0.1 to 3.0 mass% in total, and at least one selected from the group consisting of Sn, Zn, Ag, Mn, B, P, Mg, Cr, Al, Fe, Co, Ti, Zr, and Hf in an amount of 0.005 to 2.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**5.** A copper alloy sheet material, having an alloy composition comprising any one or both of Ni and Co in an amount of 0.5 to 5.0 mass% in total, and Si in an amount of 0.1 to 1.5 mass%, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**6.** A copper alloy sheet material, having an alloy composition comprising any one or both of Ni and Co in an amount of 0.5 to 5.0 mass% in total, Si in an amount of 0.1 to 1.5 mass%, and at least one selected from the group consisting of Sn, Zn, Ag, Mn, B, P, Mg, Cr, Fe, Ti, Zr, and Hf in an amount of 0.005 to 2.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**7.** A copper alloy sheet material, having an alloy composition comprising any one, two, or three of Ni, Fe, and Sn in an amount of 0.03 to 5.0 mass% in total, and P in an amount of 0.01 to 0.3 mass%, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**8.** A copper alloy sheet material, having an alloy composition comprising any one, two, or three of Ni, Fe, and Sn in an amount of 0.03 to 5.0 mass% in total, P in an amount of 0.01 to 0.3 mass%, and at least one selected from the group consisting of Zn, Si, Ag, Mn, B, Mg, Cr, Co, Ti, Zr, and Hf in an amount of 0.005 to 2.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

**9.** A copper alloy sheet material, having an alloy composition comprising Mg and P in an amount of 0.3 to 2.0 mass% in total, with the balance being copper and unavoidable impurities,
wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

10. A copper alloy sheet material, having an alloy composition comprising Mg and P in an amount of 0.3 to 2.0 mass% in total, and at least one selected from the group consisting of Sn, Zn, Ag, Mn, B, Ni, Cr, Fe, Co, Ti, Zr, and Hf in an amount of 0.005 to 2.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

11. A copper alloy sheet material, having an alloy composition comprising any one or both of Ti and Fe in an amount of 1.5 to 4.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

12. A copper alloy sheet material, having an alloy composition comprising any one or both of Ti and Fe in an amount of 1.5 to 4.0 mass% in total, and at least one selected from the group consisting of Sn, Zn, Si, Ag, Mn, B, P, Mg, Ni, Cr, Co, Zr, and Hf in an amount of 0.005 to 2.0 mass% in total, with the balance being copper and unavoidable impurities, wherein, in crystal orientation analysis by an EBSD analysis, in connection with accumulation of atomic planes oriented toward the transverse direction (TD) of a rolled sheet, an area ratio of a region having atomic planes in which the angle formed by the normal direction of (1 1 1) plane and the TD is 20° or less, is more than 50%.

13. A method of producing the copper alloy sheet material according to any one of claims 1 to 12, comprising: subjecting a copper alloy raw material having the alloy composition to give the copper alloy sheet material, to the steps of:

casting [Step 1]; a homogenization heat treatment [Step 2]; first high-temperature rolling [Step 3]; cooling to the dynamic recrystallization temperature or less [Step 4]; second high-temperature rolling [Step 5-1]; and cold-rolling [Step 6], in this order.

14. A method of producing the copper alloy sheet material according to any one of claims 1 to 12, comprising: subjecting a copper alloy raw material having the alloy composition to give the copper alloy sheet material, to the steps of:

casting [Step 1]; a homogenization heat treatment [Step 2]; first high-temperature rolling [Step 3]; water-cooling to room temperature [Step 4A]; second high-temperature rolling after reheating [Step 5-2]; and cold-rolling [Step 6], in this order.

15. The method of producing the copper alloy sheet material according to Claim 13 or 14, wherein a solution heat treatment [Step 7]; a heat treatment [Step 8]; a finish rolling [Step 9]; and a temper annealing [Step 10] are conducted in this order, after the cold-rolling [Step 6].

16. The method of producing the copper alloy sheet material according to any one of claims 13 to 15, wherein, in the second high-temperature rolling [Step 5-1] and [Step 5-2], a shape ratio $(L/h_1)$ is 3.5 or less, which is a value obtained by dividing a contact arc length (L) (mm) of a rolling roll represented by formula (1) with a sheet thickness $(h_1)$ (mm) at an entry side of a rolling pass, and a strain rate represented by formula (2):

$$( \dot{\varepsilon} )$$

is 0.5/sec or more, and the total working ratio in the second high-temperature rolling is 60% or more:

Formula (1)

$$L = \sqrt{R(h_1 - h_2)}$$

wherein R is the radius (mm) of the rolling roll, $h_1$ is the sheet thickness (mm) at the entry side, and $h_2$ is a sheet thickness (mm) at an exit side;

Formula (2)

$$\dot{\varepsilon} = \frac{V_R}{\sqrt{h_1 \cdot R}} \left(1 + \frac{r}{4}\right)\sqrt{r}$$

wherein $V_R$ is a periphery speed (mm/sec) of the roll, R is the radius (mm) of the roll, $h_1$ is the sheet thickness (mm) at the entry side, and r is a rolling reduction ratio.

17. A copper alloy part, comprising the copper alloy sheet material according to any one of claims 1 to 12.

18. A connector, comprising the copper alloy sheet material according to any one of claims 1 to 12.

## Fig. 1

(a)          (b)

## Fig. 2

### (a)

TD ←

Normal direction
of (1 1 1)

Angle formed by the normal direction of
(1 1 1) plane and the TD is 20° or less

RD
TD ← ⊙
ND

### (b)

TD ←

Normal direction
of (1 1 1)

Angle formed by the normal direction of
(1 1 1) plane and the TD is 20° or less

RD
TD ← ⊙
ND

## *Fig. 3*

| Name | P | SB | S | Z | Brass |
|---|---|---|---|---|---|
| Direction of unit cell<br><br>RD<br>↑<br>TD ←⊙<br>ND | | | | | |
| HKL | 011 | 186 | 132 | 111 | 110 |
| UVW | 1-11 | 2-11 | 6-43 | 1-10 | 1-12 |
| Angle* (misorientation angle) | 19.5° | 9.9° | 18.5° | 19.5° | 0° |

Note* Angle formed by normal direction of (1 1 1) plane and TD

| | INTERNATIONAL SEARCH REPORT | International application No. |
|---|---|---|
| | | PCT/JP2011/069465 |

A. CLASSIFICATION OF SUBJECT MATTER
*C22C9/00*(2006.01)i, *C22C9/01*(2006.01)i, *C22C9/02*(2006.01)i, *C22C9/04* (2006.01)i, *C22C9/05*(2006.01)i, *C22C9/06*(2006.01)i, *C22C9/10*(2006.01)i, *C22F1/08*(2006.01)i, *H01B1/02*(2006.01)i, *H01R13/03*(2006.01)i,
According to International Patent Classification (IPC) or to both national classification and IPC

B.   FIELDS SEARCHED

Minimum documentation searched (classification system followed by classification symbols)
C22C9/00-9/10, C22F1/08, H01B1/02, H01R13/03, C22F1/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | WO 2009/148101 A1  (The Furukawa Electric Co., Ltd.),<br>10 December 2009 (10.12.2009),<br>paragraph [0001]; table 2<br>& US 2011/0073221 A1     & EP 2298945 A1 | 5,17,18<br>1-4,6-16 |
| X<br>A | JP 2006-152392 A  (Kobe Steel, Ltd.),<br>15 June 2006 (15.06.2006),<br>paragraph [0001]; tables 1, 2<br>(Family: none) | 5,17,18<br>1-4,6-16 |
| X<br>A | WO 2010/047373 A1  (The Furukawa Electric Co., Ltd.),<br>29 April 2010 (29.04.2010),<br>claims; paragraphs [0001], [0015]<br>(Family: none) | 5,6,17,18<br>1-4,7-16 |

| ☒   Further documents are listed in the continuation of Box C. | ☐   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 November, 2011 (14.11.11) | 22 November, 2011 (22.11.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2011/069465 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-45204 A (Kobe Steel, Ltd.),<br>28 February 2008 (28.02.2008),<br>entire text<br>& US 2009/0311128 A1    & EP 2045344 A1<br>& WO 2008/010378 A1      & KR 10-2009-0023422 A<br>& CN 101899587 A | 1-18 |
| A | JP 2002-339028 A (Kobe Steel, Ltd.),<br>27 November 2002 (27.11.2002),<br>entire text<br>(Family: none) | 1-18 |
| A | JP 2009-132965 A (Hitachi Cable, Ltd.),<br>18 June 2009 (18.06.2009),<br>entire text; all drawings<br>(Family: none) | 1-18 |

Form PCT/ISA/210 (continuation of second sheet) (July 2009)

| INTERNATIONAL SEARCH REPORT | International application No. |
|---|---|
| | PCT/JP2011/069465 |

Continuation of A. CLASSIFICATION OF SUBJECT MATTER
  (International Patent Classification (IPC))

*C22F1/00*(2006.01)n

      (According to International Patent Classification (IPC) or to both national
      classification and IPC)

Form PCT/ISA/210 (extra sheet) (July 2009)

<table>
<tr><td align="center">**INTERNATIONAL SEARCH REPORT**</td><td>International application No.<br>PCT/JP2011/069465</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The invention of claim 1, the invention of claim 3, the invention of claim 5, the invention of claim 7, the invention of claim 9 and the invention of claim 11 are different from one another in the type of alloy, and thus they do not have a same or corresponding special technical feature.
    Consequently, the claims of this international application contain the following six (groups of) inventions.
    (Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☒ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

<table>
<tr><td>**INTERNATIONAL SEARCH REPORT**</td><td>International application No.<br>PCT/JP2011/069465</td></tr>
</table>

Continuation of Box No.III of continuation of first sheet(2)

(Invention group 1) the inventions of claims 1 and 2, and parts of the inventions of claims 13-18 dependent on claim 1 or 2
: inventions related to Cu-(Cr, Zr, Ti) alloy
(Invention group 2) the inventions of claims 3 and 4, and parts of the inventions of claims 13-18 dependent on claim 3 or 4
: inventions related to Cu-(Be, Ni) alloy
(Invention group 3) the inventions of claims 5 and 6, and parts of the inventions of claims 13-18 dependent on claim 5 or 6
: inventions related to Cu-(Ni, Co)-Si alloy
(Invention group 4) the inventions of claims 7 and 8, and parts of the inventions of claims 13-18 dependent on claim 7 or 8
: inventions related to Cu-(Ni, Fe, Sn)-P alloy
(Invention group 5) the inventions of claims 9 and 10, and parts of the inventions of claims 13-18 dependent on claim 9 or 10
: inventions related to Cu-Mg-P alloy
(Invention group 6) the inventions of claims 11 and 12, and parts of the inventions of claims 13-18 dependent on claim 11 or 12
: inventions related to Cu-(Ti, Fe) alloy

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005225063 A
- JP 2009242846 A
- JP 2001294957 A
- JP 2003306732 A
- JP 2010190859 A